# FASCICULE DE BREVET EUROPEEN

(11) **EP 1 845 599 B1**
(45) Date de publication et mention de la délivrance du brevet: **14.09.2016**
(21) Numéro de dépôt: 07354013.0
(22) Date de dépôt: 06.03.2007
(51) Int. Cl.: H02H 1/00, H02H 1/04

(54) **Dispositif de détection d'arc électrique, dispositif de coupure comportant un tel dispositif et procédé de détection d'arc électrique**
Vorrichtung zur Erfassung eines Lichtbogens, eine solche Vorrichtung umfassende Abschaltvorrichtung und Verfahren zur Erfassung eines Lichtbogens
Electric arc detection device, cut-off device comprising such a device and electric arc detection method

(30) Priorité: 11.04.2006 FR 0603226
(43) Date de publication de la demande: 17.10.2007
(73) Titulaire: Crouzet Automatismes, 26000 Valence (FR)
(72) Inventeur: Stemmelen, Thomas, 38050 Grenoble Cedex 09 (FR); Carton, Hervé, 38050 Grenoble Cedex 09 (FR)
(74) Mandataire: GIE Innovation Competence Group

(56) Documents cités:
- EP-A- 1 429 437
- EP-A2- 0 639 879
- US-A- 5 933 305

## Description

### DOMAINE TECHNIQUE DE L'INVENTION

L'invention est relative à un dispositif de détection d'arc électrique comprenant des moyens de mesure d'un courant électrique alternatif et d'une tension alternative, des moyens d'analyse reliés aux moyens de mesure. Les moyens d'analyse calculent, au rythme d'un signal de séquencement, une intégrale d'une valeur absolue du courant électrique alternatif sur au moins une demi-alternance, et fournissent un signal d'intégration en courant. Lesdits moyens calculent aussi une intégrale d'une valeur absolue de la tension électrique alternative sur au moins une demi-alternance, et fournissent un signal d'intégration en tension. Les moyens d'analyse comportent des moyens de différenciation fournissant un signal différentiel de courant, représentatif de la différence entre un premier signal d'intégration en courant et un second signal d'intégration en courant mesuré sur une période avant ledit premier signal d'intégration. Les moyens de différenciation fournissent aussi un signal différentiel de tension, représentatif de la différence entre un premier signal d'intégration en tension et un second signal d'intégration en tension mesuré sur une période avant ledit premier signal d'intégration. Le dispositif de détection d'arc électrique comporte en outre des moyens de décision connectés aux moyens d'analyse et destinés à envoyer au moins un signal de déclenchement.

L'invention concerne aussi un dispositif de coupure siège comportant un tel dispositif de détection d'arc électrique et un procédé de détection d'arc électrique. Le procédé de détection d'arc électrique comporte la mesure d'un courant électrique alternatif et une tension alternative avec des moyens de mesure, le calcul au rythme d'un signal de séquencement, d'une intégrale d'une valeur absolue du courant électrique alternatif et de la tension électrique alternative sur au moins une demi-alternance et d'un signal d'intégration en courant et un signal d'intégration en tension. Le procédé de détection d'arc électrique comporte la fourniture d'un signal différentiel de courant, représentatif de la différence entre un premier signal d'intégration en courant et un second signal d'intégration en courant mesuré sur une période avant ledit premier signal d'intégration et la fourniture d'un signal différentiel de tension, représentatif de la différence entre un premier signal d'intégration en tension et un second signal d'intégration en tension mesuré sur une période avant ledit premier signal d'intégration.

### ETAT DE LA TECHNIQUE ANTERIEURE

Les installations électriques sont généralement protégées par des premiers moyens de protection tel que notamment des disjoncteurs à déclenchement thermique et/ou magnétique et/ou électronique.

A titre d'exemple, des moyens de protection thermiques sont efficaces en cas de défaut électrique dû à une surcharge ou un court-circuit. Ce type de défaut ne provoque généralement pas d'incident irréversible et les dégâts se limitent alors à des dégradations matérielles locales.

En outre, la protection thermique peut être inefficace lorsque l'intensité du courant d'arc est trop faible pour provoquer l'échauffement du moyen thermique tel qu'un bilame. La protection thermique est aussi inefficace lorsque le temps de réaction du moyen thermique est trop lent, même si le courant d'arc est suffisamment intense pour chauffer le bilame.

La présence d'arc peut avoir des conséquences graves, en particulier si l'arc naît dans un environnement déflagrant ou inflammable. Ainsi, afin de sécuriser la protection des installations, notamment pour des installations aéronautiques, les premiers moyens de protection peuvent alors être associés à des seconds moyens de protection. La mesure de l'énergie dissipée par un arc détecté par un dispositif thermique, étant insuffisante, cette mesure doit être complétée par des techniques de traitement du signal permettant d'identifier des signatures d'arcs électriques. Ces signatures sont connues et spécifiées par la norme civile pour la détection d'arc UL1699 et la norme aéronautique AS 5692

On connaît deux familles principales d'arcs électriques. La première famille concerne les arcs dits parallèle et la seconde famille concerne les arcs dits série.

Parmi les arcs parallèles, on peut identifier notamment l'arc dit guillotine, l'arc dit salin et l'arc dit d'usure par frottement. L'arc dit d'usure par frottement sera dénommé par la suite arc "chafing".

L'arc guillotine est généré lorsqu'une pièce conductrice et contondante vient en contact avec un conducteur sous tension d'un fil électrique dont l'isolant a été coupé, la pièce conductrice et le conducteur n'étant pas au même potentiel électrique.

L'arc salin est généré lorsqu'une goutte d'eau saline est présente de façon épisodique entre deux conducteurs électriques, les deux conducteurs n'étant pas au même potentiel électrique. La solution d'eau saline appliquée entre deux conducteurs dénudés crée un chemin conducteur entre les conducteurs.

L'arc "chafing" est généré lorsqu'il y a frottement entre une portion de fil dénudé et une pièce conductrice, les deux éléments n'étant pas au même potentiel électrique.

L'arc série est généré au point de contact entre deux pièces conductrices traversées par un courant électrique. A titre d'exemple, des arcs série peuvent se produire entre une cosse d'un câble électrique et un bornier de tableau lorsque la cosse est mal connectée au bornier. La présence d'un arc série s'accompagne de ruptures de consommation de courte durée dues à des ouvertures intempestives du circuit électrique.

Chaque type d'arc comporte une signature de courant électrique particulière.

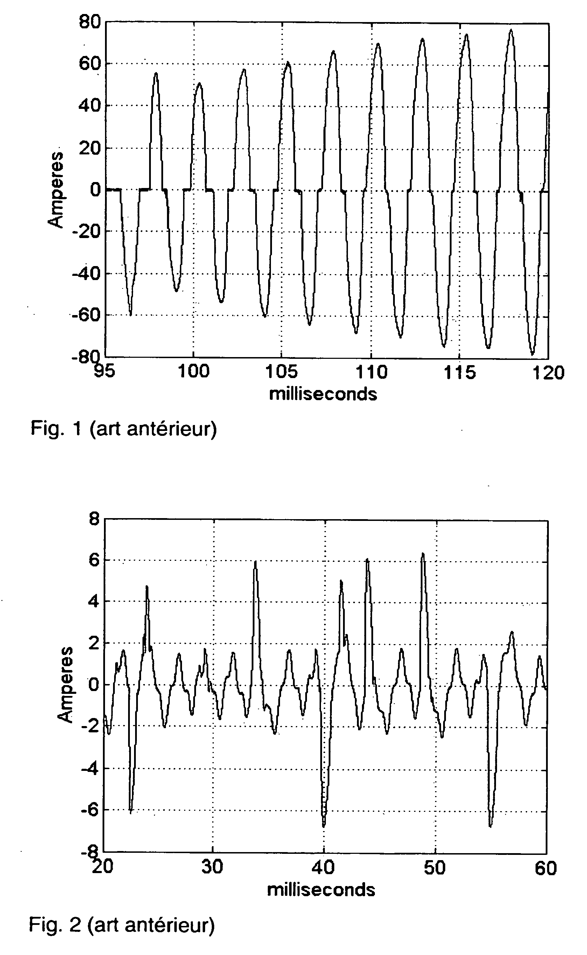

Comme représenté sur la figure 1, la présence d'un arc guillotine est caractérisée par l'apparition sur la courbe de courant électrique, sur chaque demi-alternance, d'un lobe centré ayant ses deux extrémités aplaties. Ce type de courbe est appelé par les experts "flat zero crossing".

La présence d'un arc salin est caractérisée par l'apparition d'une succession de pics de courant, répartis aléatoirement dans le temps. Les impulsions de courant apparaissent à chaque goutte, ce qui se traduit par une décharge violente dans la solution saline. La figure 2 représente des pics de courant de moyenne intensité obtenus lorsque le chemin parcouru par l'arc contient des éléments qui limitent l'intensité du courant d'arc. Ceci est le cas lorsque de la pollution est observée sur le conducteur. La figure 3 représente des pics de courant de très forte intensité obtenus lorsque le chemin parcouru par l'arc ne contient pas des éléments qui limitent l'intensité du courant d'arc. Au fil du temps, la fréquence des décharges s'accélère pour aboutir à un arc permanent qui finit par détruire les fils. On obtient alors une courbe de courant telle que représentée sur la figure 4.

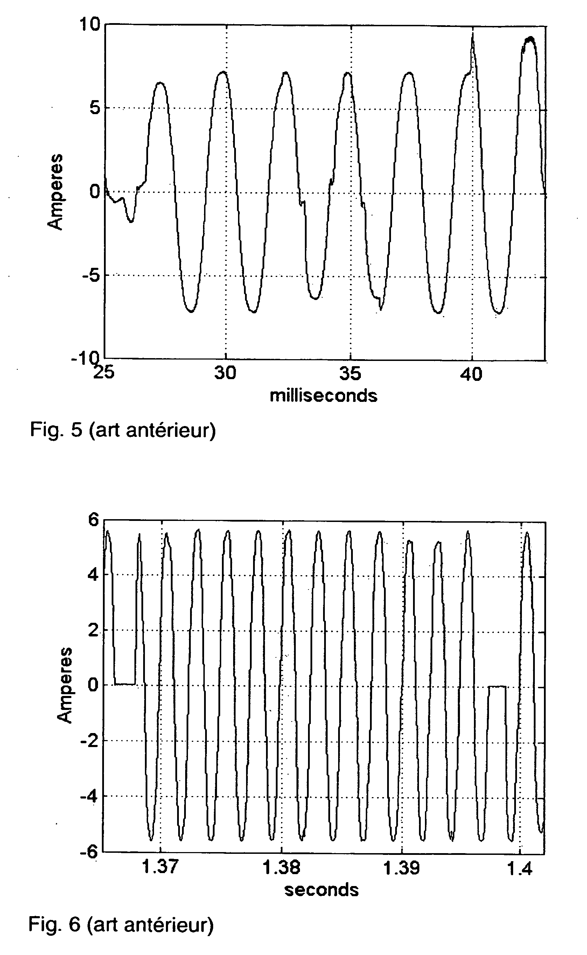

La figure 5 représente une courbe de courant obtenue en présence d'un arc "chafing". La forme de la courbe de courant alterne, de façon aléatoire, entre la sinusoïde et le "flat zero crossing".

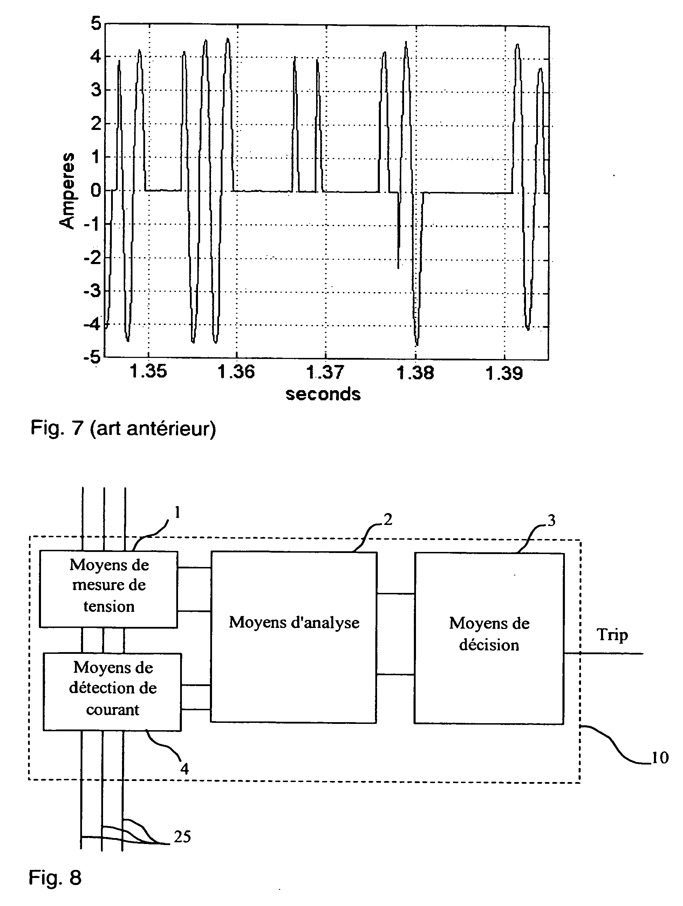

Les figures 6 et 7 représentent des courbes de courant obtenues en présence d'arcs série. La figure 6 représente une courbe de courant lorsque le nombre d'ouvertures intempestives est faible. La figure 7 représente une courbe de courant lorsque le nombre d'ouvertures est important.

Les techniques de détection existantes peuvent être efficaces pour des arcs produisant des courants de forte intensité, principalement les arcs guillotines, "chafing" et les arc salins à forte intensité.

Parmi les techniques existantes, certaines procèdent à l'analyse fréquentielle des signaux de courant électrique. Ces méthodes de détection sont généralement sensibles aux bruits haute/hyper fréquence HF provoqués par des perturbations externes tels que notamment des radiofréquences, des radars ou des alimentations à découpage. Des fausses alarmes risquent d'être observées et peuvent provoquer des déclenchements intempestifs. Ces phénomènes parasites sont particulièrement présents pour toute analyse de fréquences au-delà des 100 kHz.

D'autres techniques procèdent à une discrimination point par point du signal du courant électrique. Ces méthodes imposent d'utiliser une technologie numérique, des vitesses de traitement et d'acquisition rapides ainsi qu'une puissance de calcul importante.

Certaines méthodes analysent les variations de la valeur du courant électrique par dérivation. Ces méthodes permettent de détecter exclusivement les arcs de forte énergie. En outre, ces méthodes présentent aussi le risque d'être sensibles aux perturbations HF externes.

Certaines méthodes telles que décrites dans le document US5933305, analysent les variations de la valeur du courant électrique par intégration. Ces méthodes sont alors moins sensibles aux perturbations HF externes. Afin d'optimiser la résolution de traitement, le signal de courant électrique est filtré afin de supprimer la fondamentale du signal. Ce gain en résolution est réellement bénéfique lorsque le signal électrique est proche d'une sinusoïde. Pour les arcs électriques à haute énergie, le fait de supprimer la fondamentale est pénalisant car ladite fondamentale contient l'information permettant de reconnaître la signature de ce type d'arc. En outre, les moyens de traitements, notamment ceux utilisés pour le filtrage ou la mémorisation de portion de signal entraîne des coûts de réalisation supplémentaires.

### EXPOSE DE L'INVENTION

L'invention vise donc à remédier aux inconvénients de l'état de la technique, de manière à proposer un dispositif de détection d'arc dans une installation électrique, qui soit efficace quel que soit le niveau d'énergie de l'arc électrique et ne nécessitant peu de moyens de calcul et de traitement.

Les moyens de décision du dispositif de détection selon l'invention comportent une unité d'inhibition fournissant des signaux d'inhibition adaptatifs, des moyens de détection destinés à fournir chacun au moins un signal d'aide à la décision en fonction d'au moins un signal d'inhibition adaptatif et du signal différentiel de courant ou du signal d'intégration en courant. Les moyens de décision comportent une unité de décision destinée à fournir au moins un signal de déclenchement en fonction de la valeur de signaux d'aide à la décision.

Avantageusement, le signal de séquencement est synchronisé avec le passage à zéro de la tension alternative.

Selon un mode de réalisation de l'invention, un premier signal d'inhibition adaptatif est actif lorsque le signal de séquencement n'est plus synchronisé sur le passage à zéro de la tension électrique alternative.

Selon un mode de réalisation de l'invention, un second signal d'inhibition adaptatif est actif lorsque le signal différentiel de courant suit la même variation que le signal différentiel de tension pendant une durée d'analyse du courant.

Selon un mode de réalisation de l'invention, un troisième signal d'inhibition adaptatif est actif lorsque le signal différentiel de courant décroît pour atteindre une valeur nulle après avoir subit une brutale augmentation.

Selon un mode de réalisation de l'invention, un quatrième signal d'inhibition adaptatif est actif lorsque le courant électrique alternatif est de forme asymétrique par rapport à une ligne de zéro de courant, l'asymétrique tendant à diminuer pour s'annuler.

Selon un mode de réalisation de l'invention, un cinquième signal d'inhibition adaptatif est actif lorsqu'une diminution du signal différentiel de courant est supérieure à la valeur moyenne du signal d'intégration en courant.

Selon un mode de réalisation de l'invention, un premier moyen de détection, destiné à détecter des arcs électriques de très forte intensité, fournit un premier signal d'aide à la décision si, sur une première durée d'analyse, le signal d'intégration en courant est supérieur à un seuil de saturation, au moins une fois, et le premier signal d'inhibition adaptatif est inactif.

Avantageusement, le premier moyen de détection comporte des premiers moyens de mémorisation comptant le nombre de fois où le signal d'intégration en courant est supérieur au seuil de saturation.

De préférence, le premier moyen de détection fournit un premier signal d'aide à la décision si le nombre de fois où le signal d'intégration en courant est supérieur au seuil de saturation, est supérieur à un premier seuil de comptage.

De préférence, la première durée d'analyse est comprise entre 0 et 0,2 secondes.

Selon un mode de réalisation de l'invention, un second moyen de détection, destiné à détecter des arcs électriques de forte intensité, fournit un second signal d'aide à la décision si, sur une seconde durée d'analyse, le signal différentiel de courant est successivement supérieur à un seuil absolu, au moins une fois, croissant avec un taux de variation supérieur à un seuil de variation relative. Les premier, second, troisième et quatrième signaux d'inhibition adaptatifs sont inactifs.

Avantageusement, le second moyen de détection comporte des seconds moyens de mémorisation comptant le nombre de fois où le signal différentiel de courant est successivement supérieur au seuil absolu, puis croissant avec un taux de variation supérieur au seuil de variation relative.

De préférence, le second moyen de détection fournit un second signal d'aide à la décision si le nombre de fois où le signal différentiel de courant est successivement supérieur au seuil absolu, puis croissant avec un taux de variation supérieur à un seuil de variation relative, est supérieur à un second seuil de comptage.

De préférence, la seconde durée d'analyse est comprise entre 0 et 0,2 secondes.

Selon un mode de réalisation de l'invention, un troisième moyen de détection, destiné à détecter des arcs salins de moyenne intensité, fournit un troisième signal d'aide à la décision si, sur une troisième durée d'analyse, le signal différentiel de courant est supérieur à un premier seuil salin, au moins une fois, tout en n'ayant pas été inférieur à un premier seuil série sur les deux demi-alternances précédentes du courant électrique alternatif. Les premier, second, troisième et quatrième signaux d'inhibition adaptatifs sont inactifs.

Avantageusement, le troisième moyen de détection comporte des troisièmes moyens de mémorisation comptant le nombre de fois où le signal différentiel de courant est supérieur au premier seuil salin, tout en n'ayant pas été inférieur à un premier seuil série sur les deux demi-alternances précédentes du courant électrique alternatif.

De préférence, le troisième moyen de détection fournit un troisième signal d'aide à la décision si le nombre de fois où le signal différentiel de courant est supérieur au premier seuil salin, tout en n'ayant pas été inférieur à un premier seuil série sur les deux demi-alternances précédentes du courant électrique alternatif, est supérieur à un troisième seuil de comptage.

De préférence, la troisième durée d'analyse est comprise entre 0 et 0,2 secondes.

Selon un mode de réalisation de l'invention, un quatrième moyen de détection, destiné à détecter des arcs série apparaissant dans un circuit avec beaucoup de ruptures de courant, fournit un quatrième signal d'aide à la décision si, sur une quatrième durée d'analyse, le signal différentiel de courant est inférieur à un premier seuil série, au moins une fois, tout en n'ayant pas été supérieur à un premier seuil salin sur les deux demi-alternances précédentes du courant électrique alternatif. Les premier, second, troisième et quatrième signaux d'inhibition adaptatifs sont inactifs.

Avantageusement, le quatrième moyen de détection comporte des quatrièmes moyens de mémorisation comptant le nombre de fois où le signal différentiel de courant est inférieur au premier seuil série, tout en ayant pas été supérieur au premier seuil salin sur les deux demi-alternances précédentes du courant électrique alternatif.

De préférence, le quatrième moyen de détection fournit un quatrième signal d'aide à la décision si le nombre de fois où le signal différentiel de courant est inférieur au premier seuil série, tout en ayant pas été supérieur au premier seuil salin sur les deux demi-alternances précédentes du courant électrique alternatif, est supérieur à un quatrième seuil de comptage.

De préférence, la quatrième durée d'analyse est comprise entre 0 et 0,2 secondes.

Selon un mode de réalisation de l'invention, un cinquième moyen de détection, destiné à détecter des arcs salins de forte intensité, fournit un cinquième signal d'aide à la décision si, sur une cinquième durée d'analyse, le signal différentiel de courant subit au moins une fois successivement une première augmentation très forte où ledit signal est supérieur à un second seuil salin, une seconde augmentation moins importante que la première augmentation où ledit signal est inférieur à un second seuil salin bis, une forte diminution où ledit signal est inférieur à un troisième seuil salin, le second seuil salin étant supérieur ou égal au second seuil salin bis et le second seuil salin bis étant supérieur au troisième seuil salin. Le premier signal d'inhibition adaptatif étant inactif.

Avantageusement, le cinquième moyen de détection comporte des cinquièmes moyens de mémorisation comptant le nombre de fois où le signal différentiel de courant subit successivement une première augmentation très forte, où ledit signal est supérieur à un second seuil salin, une seconde augmentation moindre, où ledit signal est inférieur à un second seuil salin bis, et une forte diminution, où ledit signal est inférieur à un troisième seuil salin,

De préférence, le cinquième moyen de détection fournit un cinquième signal d'aide à la décision si le nombre de fois où le signal différentiel de courant subit successivement une première augmentation très forte, où ledit signal est supérieur, à un second seuil salin, une seconde augmentation moindre, où ledit signal est inférieur à un second seuil salin bis, et une forte diminution, où ledit signal est inférieur à un troisième seuil salin, est supérieur à un cinquième seuil de comptage.

De préférence, la cinquième durée d'analyse est comprise entre huit et douze secondes.

Selon un mode de réalisation de l'invention, un sixième moyen de détection, destiné à détecter des arcs série apparaissant dans un circuit avec peu de ruptures de courant, fournit un sixième signal d'aide à la décision si, sur une sixième durée d'analyse, le signal différentiel de courant subit au moins une fois successivement une première diminution très forte, où ledit signal est inférieur à un second seuil série, une seconde diminution moins importante que la première diminution, où ledit signal est supérieur à un second seuil série bis, une forte augmentation, où ledit signal est supérieur à un troisième seuil série, le second seuil série étant inférieur ou égal au second seuil série bis et le second seuil série bis étant inférieur au troisième seuil série. Le premier et cinquième signaux d'inhibition sont inactifs.

Avantageusement, le sixième moyen de détection comporte des sixièmes moyens de mémorisation comptant le nombre de fois où le signal différentiel de courant subit successivement une première diminution très forte, où ledit signal est inférieur à un second seuil série, une seconde diminution moindre, où ledit signal est supérieur à un second seuil série bis, est une forte augmentation, où ledit signal est supérieur à un troisième seuil série:

De préférence, le sixième moyen de détection fournit un sixième signal d'aide à la décision si le nombre de fois où le signal différentiel de courant subit successivement une première diminution très forte, où ledit signal est inférieur à un second seuil série, une seconde diminution moindre, où ledit signal est supérieur à un second seuil série bis, et une forte augmentation, où ledit signal est supérieur à un troisième seuil série, est supérieur à un sixième seuil de comptage.

De préférence, la sixième durée d'analyse est comprise entre une demi-seconde et une seconde et demie.

Dans un mode particulier de réalisation, des moyens d'analyse comportent un moyen pour déterminer la valeur maximale du courant électrique alternatif, au rythme d'un signal de séquencement.

Avantageusement, le dispositif de détection comporte des moyens d'échantillonnage des signaux mesurés de courant et de tension et comporte des moyens de stockage desdits signaux échantillonnés.

Avantageusement, le dispositif de détection comporte des moyens d'échantillonnage des signaux d'intégration de courant et de tension et comporte des moyens de stockage desdits signaux échantillonnés.

De préférence, le fonctionnement de chaque moyen de calcul des signaux d'intégration et différentiels de courant et de tension est synchronisé avec l'envoi du signal de séquencement.

De préférence, le fonctionnement de chaque moyen de détection est synchronisé avec l'envoi du signal de séquencement.

L'invention concerne un dispositif de coupure comprenant un mécanisme d'ouverture de contacts électriques et un relais de commande relié à un dispositif de détection tel que défini ci-dessus. Le relais de commande est destiné à recevoir au moins un signal de déclenchement des moyens de décision du dispositif de détection.

Le procédé de détection d'arc électrique selon l'invention comporte la fourniture d'un signal de déclenchement dépendant de la valeur de signaux d'aide à la décision, chaque signal d'aide à la décision étant déterminé en fonction de la fourniture d'au moins un signal d'inhibition adaptatif et du signal différentiel de courant ou du signal d'intégration en courant.

Avantageusement, le procédé de détection d'arc synchronise le signal de séquencement avec le passage à zéro de la tension alternative.

Selon un mode de réalisation de l'invention, le procédé comporte la fourniture d'un premier signal d'inhibition adaptatif actif lorsque le signal de séquencement n'est plus synchronisé sur le passage à zéro de la tension électrique alternative.

Selon un mode de réalisation de l'invention, le procédé comporte la fourniture d'un second signal d'inhibition adaptatif actif lorsque le signal différentiel de courant suit la même variation que le signal différentiel de tension pendant une durée d'analyse du courant.

Selon un mode de réalisation de l'invention, le procédé comporte la fourniture d'un troisième signal d'inhibition adaptatif actif lorsque le signal différentiel de courantdécroît pour atteindre une valeur nulle après avoir subit une brutale augmentation.

Selon un mode de réalisation de l'invention, le procédé comporte la fourniture d'un quatrième signal d'inhibition adaptatif actif lorsque le courant électrique alternatif est de forme asymétrique par rapport à une ligne de zéro de courant, l'asymétrique tendant à diminuer pour s'annuler.

Selon un mode de réalisation de l'invention, le procédé comporte la fourniture d'un cinquième signal d'inhibition adaptatif actif lorsqu'une diminution du signal différentiel de courant est supérieure à la valeur moyenne du signal d'intégration en courant.

Selon un mode de réalisation de l'invention, le procédé comporte la fourniture d'un premier signal d'aide à la décision si, sur une première durée d'analyse , le signal d'intégration en courant est supérieur à un seuil de saturation , au moins une fois. Le premier signal d'inhibition adaptatif est inactif.

Selon un mode de réalisation de l'invention, le procédé comporte la fourniture d'un second signal d'aide à la décision si, sur une seconde durée d'analyse, le signal différentiel de courant est successivement supérieur à un seuil absolu, au moins une fois, croissant avec un taux de variation supérieur à un seuil de variation relative. Les premier, second, troisième et quatrième signaux d'inhibition adaptatifs sont inactifs.

Selon un mode de réalisation de l'invention, le procédé comporte la fourniture d'un troisième signal d'aide à la décision si, sur une troisième durée d'analyse, le signal différentiel de courant est supérieur à un premier seuil salin, au moins une fois, tout en n'ayant pas été inférieur à un premier seuil série sur les deux demi-alternances précédentes du courant électrique alternatif. Les premier, second, troisième et quatrième signaux d'inhibition adaptatifs sont inactifs.

Selon un mode de réalisation de l'invention, le procédé comporte la la fourniture d'un quatrième signal d'aide à la décision si, sur une quatrième durée d'analyse, le signal différentiel de courant est inférieur à un premier seuil série, au moins une fois, tout en n'ayant pas été supérieur à un premier seuil salin sur les deux demi-alternances précédentes du courant électrique alternatif. Les premier, second, troisième et quatrième signaux d'inhibition adaptatifs sont inactifs.

Selon un mode de réalisation de l'invention, le procédé comporte la la fourniture d'un cinquième signal d'aide à la décision si, sur une cinquième durée d'analyse, le signal différentiel de courant subit au moins une fois successivement une première augmentation très forte où ledit signal est supérieur à un second seuil salin, une seconde augmentation moins importante que la première augmentation où ledit signal est inférieur à un second seuil salin bis et une forte diminution où ledit signal est inférieur à un troisième seuil salin. Le second seuil salin est supérieur ou égal au second seuil salin bis et le second seuil salin bis est supérieur au troisième seuil salin. Le premier signal d'inhibition adaptatif étant inactif.

Selon un mode de réalisation de l'invention, le procédé comporte la fourniture d'un sixième signal d'aide à la décision si, sur une sixième durée d'analyse, le signal différentiel de courant subit au moins une fois successivement une première diminution très forte, où ledit signal est inférieur à un second seuil série, une seconde diminution moins importante que la première diminution, où ledit signal est supérieur à un second seuil série bis, et une forte augmentation, où ledit signal est supérieur à un troisième seuil série. Le second seuil série étant inférieur ou égal au second seuil série bis et le second seuil série bis étant inférieur au troisième seuil série. Les premier et cinquième signaux d'inhibition adaptatifs sont inactifs

### BREVE DESCRIPTION DES FIGURES

D'autres avantages et caractéristiques ressortiront plus clairement de la description qui va suivre de modes particuliers de réalisation de l'invention, donnés à titre d'exemples non limitatifs, et représentés aux dessins annexés sur lesquels :
la figure 1 représente, une courbe représentative d'un courant électrique en présence d'un arc électrique parallèle de type "guillotine";

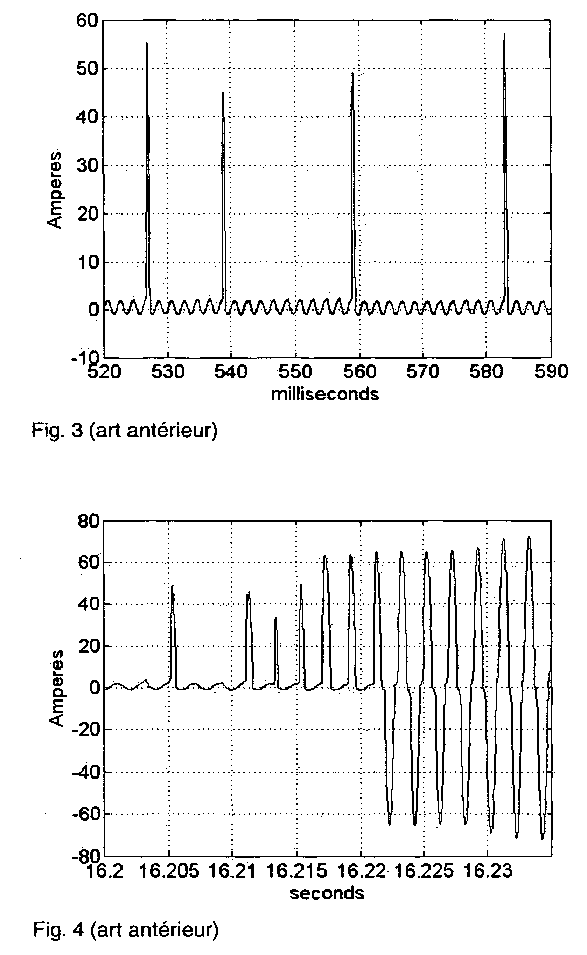

les figures 2 à 4 représentent respectivement une courbe représentative d'un courant électrique en présence d'un arc électrique parallèle de type "salin";
la figure 5 représente, une courbe représentative d'un courant électrique en présence d'un arc électrique parallèle de type "chafing";
les figures 6 et 7 représentent respectivement une courbe représentative d'un courant électrique en présence d'un arc électrique "série" dans un circuit faiblement perturbé et fortement perturbé ;
la figure 8 représente le bloc diagramme du dispositif de détection selon un mode de réalisation de l'invention ;

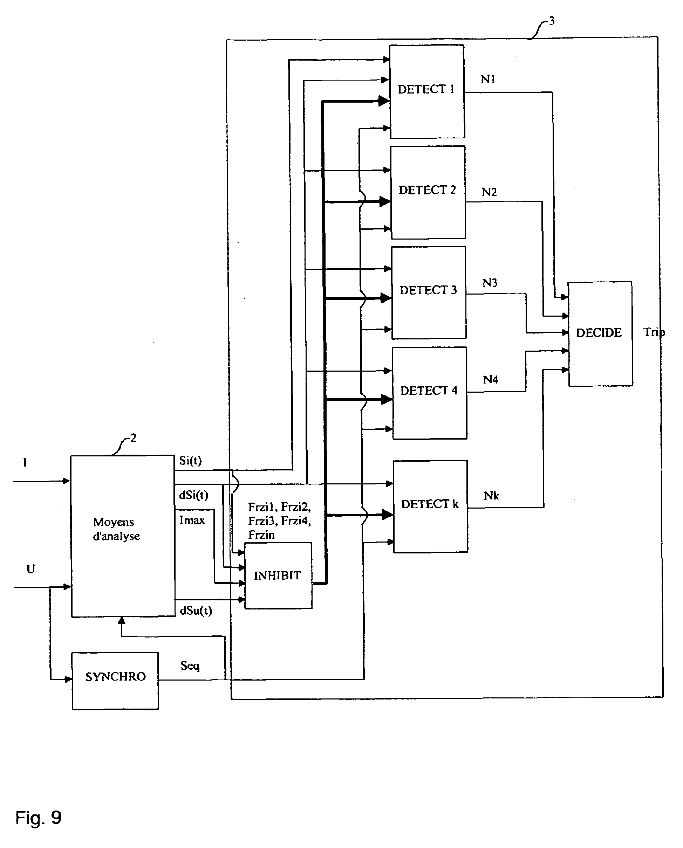

la figure 9 représente une vue schématique des moyens d'analyse et des moyens de décision du dispositif de détection selon la figure 8 ;

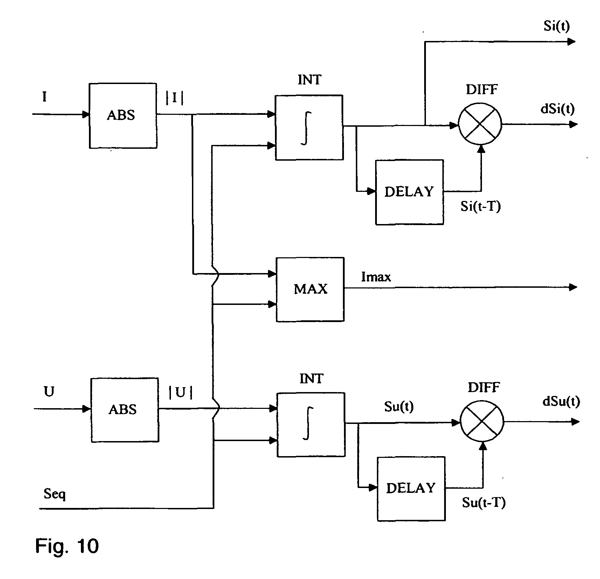

la figure 10 représente une vue schématique des moyens d'analyse selon la figure 9 ;

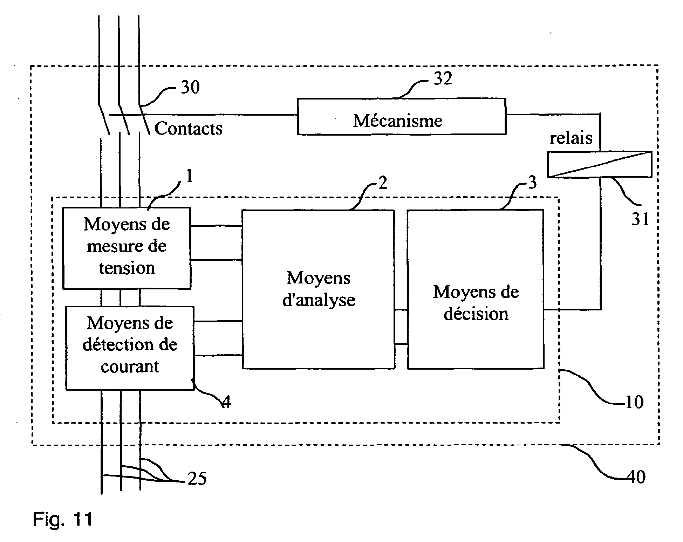

la figure 11 représente le bloc diagramme du dispositif de protection comportant un dispositif de détection selon un mode de réalisation de l'invention ;

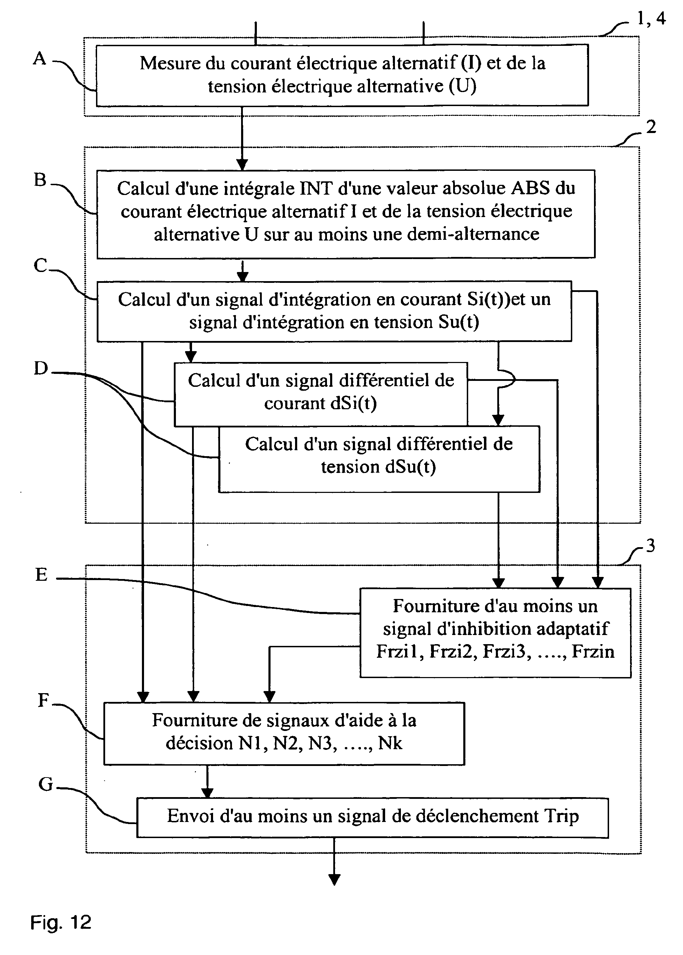

la figure 12 représente un algorithme de fonctionnement du procédé de détection d'arc selon un mode de réalisation de l'invention.

### DESCRIPTION DETAILLEE D'UN MODE DE REALISATION

En référence à la figure 8, un dispositif de détection 10 d'arc électrique selon un mode de réalisation de l'invention, comporte des moyens de mesure 4 d'un courant électrique alternatif I circulant dans les lignes ou conducteurs électriques 25. Le dispositif de détection 10 d'arc électrique comporte en outre des moyens de mesure 1 d'une tension alternative U.

Lesdits moyens de mesure 1, 4 sont reliés à des moyens d'analyse 2 reliés à des moyens de décision 3. Les moyens de décision 3 sont destinés à founir au moins un signal de déclenchement Trip. Lesdits moyens d'analyse mettent en évidence les signatures des arcs électriques.

Comme représenté sur la figure 10, les moyens d'analyse 2 comportent des moyens de calcul destinés à calculer, au rythme d'un signal de séquencement Seq, une intégrale INT d'une valeur absolue ABS du courant électrique alternatif I sur au moins une demi-alternance, et fournir un signal d'intégration en courant Si(t).

Les moyens d'analyse 2 comportent aussi des moyens de calcul destinés à calculer, au rythme d'un signal de séquencement Seq, une intégrale INT d'une valeur absolue ABS, de la tension électrique alternative U sur au moins une demi-alternance, et fournir un signal d'intégration en tension Su(t).

Les moyens d'analyse 2 comportent un moyen pour déterminer la valeur maximale MAX du courant électrique alternatif I, au rythme d'un signal de séquencement Seq.

En outre, les moyens d'analyse 2 comportent des moyens de différenciation DIFF fournissant un signal différentiel de courant dSi(t), représentatif de la différence entre un premier signal d'intégration en courant Si(t) et un second signal d'intégration en courant Si(t-T) mesuré une période T avant ledit premier signal d'intégration. Les moyens de différenciation DIFF fournissent aussi un signal différentiel de tension dSu(t), représentatif de la différence entre un premier signal d'intégration en tension Su(t) et un second signal d'intégration en tension Su(t-T) mesuré une période T avant ledit premier signal d'intégration.

Le signal de séquencement Seq est fourni par une unité de synchronisation SYNCHRO. Selon un mode de réalisation de l'invention, le signal de séquencement Seq est de préférence synchronisé avec le passage à zéro de la tension électrique alternative U mesurée. Toutes les grandeurs analysées sont donc recalculées, après avoir été mémorisées, à chaque nouvelle demi-alternance de la tension du réseau électrique. Dans un mode particulier de réalisation, la synchronisation du signal de séquencement avec le passage à zéro de la tension du réseau électrique est obtenue avec une boucle de verrouillage de phase.

Le dispositif de détection 10 comporte des moyens d'échantillonnage des signaux d'intégration en courant Si(t) et en tension Su(t) et comporte des moyens de stockage desdits signaux échantillonnés.

De préférence, les moyens d'échantillonnage échantillonnent la mesure du courant électrique I dans une installation électrique et la mesure de la tension U du réseau électrique. Les moyens d'analyse comportent des moyens numériques, cadencés par un signal de séquencement Seq, pour le calcul de la surface du courant et de la tension échantillonnée, de recherche de la valeur maximale du courant échantillonné et de calcul de la variation de surface du courant et de la tension

Dans un second mode particulier de réalisation, les moyens d'échantillonnage échantillonnent les signaux de surface, et variation de surface, du courant et de la tension et du maximum de courant. Les moyens d'analyse 2 comportent des moyens analogiques, cadencés par un signal de séquencement seq, pour le calcul de la surface du courant et de la tension mesurées, de recherche de la valeur maximale du courant et de calcul de la variation de surface.

Comme représenté sur la figure 9, les moyens de décision 3 comportent une unité d'inhibition INHIBIT fournissant un ou plusieurs signaux d'inhibition adaptatifs Frzi1, Frzi2, Frzi3, ...., Frzin.

On parle de signaux d'inhibition adaptatifs compte tenu que chaque signal d'inhibition est fourni en fonction d'une situation de fonctionnement déterminée. Cette situation de fonctionnement est dépendante des conditions de courant et de tension mesurées au cours d'une durée. Chaque signal d'inhibition adaptatif peut prendre au moins deux valeurs. Une première valeur pour laquelle le signal d'inhibition adaptatif est dit actif et une seconde valeur pour laquelle le signal d'inhibition adaptatif est dit inactif. Lorsque le signal d'inhibition adaptatif est actif, le dispositif de détection 10 ne peut pas envoyer signal de déclenchement Trip, le dispositif de détection 10 est donc inhibé.

L'unité d'inhibition INHIBIT fournit un ou plusieurs signaux d'inhibition adaptatifs actifs lorsqu'il y a des perturbations sur le réseau, dues, notamment, au changement de régime de l'équipement de génération de la puissance électrique. L'unité d'inhibition INHIBIT fournit aussi un signal d'inhibition adaptatif actif après avoir détecté le démarrage de charges inductives et de machines tournantes, le changement de régime sur des machines tournantes en marche. En outre, l'unité d'inhibition INHIBIT fournit aussi un signal d'inhibition adaptatif actif lors de la perte de synchronisation du signal de séquencement avec les passages à zéro de la tension du réseau électrique et/ou la commutation rapide et répétitive de charges complexes.

Sans cette reconnaissance de l'unité d'inhibition INHIBIT, toutes ces situations de fonctionnement pourraient être vues dans certains cas comme des défauts de fonctionnement et pourraient engendrer des fausses alarmes.

Un premier signal d'inhibition adaptatif Frzi1 actif est fourni lorsque le signal de séquencement Seq n'est plus synchronisé sur le passage à zéro de la tension électrique alternative U. Cette perte de synchronisation est détectée lorsque la fréquence du signal de séquencement est en dehors de l'échelle de fréquence qui caractérise un réseau électrique ; par exemple plus ou moins 5 Hz pour un réseau à fréquence fixe égale à 400 Hz et de 360 Hz à 800 Hz pour un réseau à fréquence variable.

En outre, une perte de synchronisation est détectée lorsque la fréquence du signal de séquencement est en dessous d'un niveau de précision souhaitée ; par exemple 5 %.

Un second signal d'inhibition adaptatif Frzi2 actif est fourni lorsque le signal différentiel de courant dSi(t) suit, pendant une durée d'analyse du courant, la même variation que le signal différentiel de tension dSu(t).

Un troisième signal d'inhibition adaptatif Frzi3 actif est fourni lorsque le signal différentiel de courant dSi(t), après avoir subit une brutale augmentation, décroît pour atteindre une valeur nulle. Ces variations se produisent pendant une durée d'analyse du courant déterminée. Ce type de signature est typique d'un démarrage de charge inductive tel qu'un moteur. La durée d'analyse de la décroissance du signal différentiel de courant dSi(t) est de préférence strictement supérieure à trois demi-alternances. Cette durée minimale est nécessaire pour calculer le signal différentiel de courant dSi(t).

En outre, la durée d'analyse de la décroissance du signal différentiel de courant dSi(t) peut se dérouler pendant huit demi-alternances, correspondant à la rapidité de décision demandée par la norme. Selon ce mode de réalisation, la durée d'analyse utilisée est de préférence égale à cinq demi-alternances.

Un quatrième signal d'inhibition adaptatif Frzi4 actif est fourni par l'unité d'inhibition INHIBIT, lorsque le courant électrique alternatif I a une forme asymétrique par rapport à une ligne de zéro de courant, l'asymétrique tendant à diminuer pour s'annuler. Cette observation se déroule pendant une durée d'analyse du courant. Ce type de signature est typique d'une machine tournante commutée. La durée d'analyse de la décroissance du signal différentiel de courant dSi(t) doit être strictement supérieure à trois demi-alternances. Selon un mode de réalisation, la durée d'analyse utilisée est égale à six demi-alternances. En outre, selon ce mode de réalisation la valeur du courant maximum Imax est utilisé de préférence pour l'analyse de forme asymétrique du courant électrique. Cette analyse pourrait aussi se baser sur la valeur du signal d'intégration en courant Si(t)..

Un cinquième signal d'inhibition Frzi5 est, pendant une durée d'analyse du courant I, actif lorsque la diminution du signal différentiel de courant dSi(t) est supérieure à la valeur moyenne du signal d'intégration en courant Si(t). La valeur moyenne du signal d'intégration de courant Si(t) est calculée à chaque cycle. Selon ce mode de réalisation, la moyenne est calculée sur huit demi-alternances.

Comme représenté sur la figure 9, les moyens de décision 3 comportent un ou plusieurs moyens de détection DETECT1, DETECT2, DETECT3, DETECT4,... , DETECTk destinés à fournir chacun au moins un signal d'aide à la décision N1, N2, N3, ...., Nk, en fonction d'au moins un signal d'inhibition adaptatif Frzi1, Frzi2, Frzi3, ...., Frzin, et en fonction du signal différentiel de courant dSi(t) ou du signal d'intégration en courant Si(t). Le fonctionnement des moyens de détection DETECT1, DETECT2, DETECT3, DETECT4, ..., DETECTk est, de préférence, synchronisé avec l'envoi du signal de séquencement Seq.

Les moyens de détection DETECT1, DETECT2, DETECT3, DETECT4, ..., DETECTk comportent des moyens de comparaison à seuil. Les moyens de comparaison comparent notamment un différentiel de courant dSi(t) ou du signal d'intégration en courant Si(t) respectivement à un seuil. L'état du signal en sortie de chaque comparateur est mémorisé, à chaque nouvelle demi-alternance, dans des moyens de mémorisation et de comptage dédiés. La durée de mémorisation de chaque état en sortie de comparateur est prédéfinie pour chaque moyen de mémorisation. La valeur contenue dans un compteur est égale au nombre d'états actifs mémorisés par le moyen de mémorisation associé. Le contenu de chaque compteur est transmis à un signal d'aide à la décision.

Les moyens de décision 3 comportent une unité de décision DECIDE destiné à fournir au moins un signal de déclenchement Trip en fonction de la valeur des signaux d'aide à la décision N1, N2, N3, ...., Nk.

Un premier moyen de détection DETECT1 est destiné à détecter des arcs électriques de très forte intensité. Ledit moyen de détection fournit un premier signal d'aide à la décision N1 si, sur une première durée d'analyse W1, le signal d'intégration en courant Si(t) est supérieur à un seuil de saturation SA, au moins une fois. En outre, le premier signal d'inhibition adaptatif Frzi1 est inactif. Chaque dépassement du seuil de saturation active la sortie du comparateur. L'état en sortie de comparateur est ensuite mémorisé pour une durée prédéfinie.

Dans un mode de réalisation préférentiel, le premier moyen de détection DETECT1 comporte des premiers moyens de mémorisation MEM1 comptant le nombre de fois où le signal d'intégration en courant Si(t) est supérieur au seuil de saturation SA. Le premier signal d'aide à la décision N1 est alors fourni si le nombre de fois où le signal d'intégration en courant Si(t) est supérieur au seuil de saturation SA, est supérieur à un premier seuil de comptage Sm1. Autrement dit, le premier signal d'aide à la décision N1 est alors fourni si la valeur mémorisée dans MEM1 est supérieure à un premier seuil de comptage Sm1.

La première durée d'analyse W1 est comprise entre 0 et 0,2 secondes. De préférence, la première durée d'analyse W1 est dépendante du premier seuil de comptage Sm1 ainsi que la fréquence du réseau électrique. A titre d'exemple, pour une fréquence réseau fixe égale à 400 Hz, la première durée d'analyse W1 est égale au produit entre la valeur du premier seuil de comptage Sm1 et 1,25 ms, le produit étant au maximum égal à 0,1 secondes. Pour une fréquence réseau variable entre 360 Hz et 800 Hz, la première durée d'analyse W1 est égale au produit entre la valeur du premier seuil de comptage Sm1 et 1,389 ms, le produit étant au maximum égal à 0,1 secondes.

Un second moyen de détection DETECT2 est destiné à détecter des arcs électriques persistants et de forte intensité. Ledit moyen de détection fournit un second signal d'aide à la décision N2 si, sur une seconde durée d'analyse W2, le signal différentiel de courant dSi(t) est successivement supérieur à un seuil absolu L1_absolute, au moins une fois, puis croissant avec un taux de variation supérieur à un seuil de variation relative L1_relative. Ainsi, la variation de surface du courant est comparée à un seuil représentatif d'un "saut" de courant. Le dépassement de seuil active la sortie du comparateur. L'état en sortie de comparateur est ensuite mémorisé pour une durée prédéfinie. De plus, l'état en sortie de comparateur active un mécanisme de surveillance détectant l'accroissement de la surface du courant au-delà d'un taux prédéfini. Chaque dépassement de ce taux active un signal qui est mémorisé pour une durée prédéfinie. En outre, le second signal d'aide à la décision N2 est fourni si les premier, second, troisième et quatrième signaux d'inhibition adaptatifs Frzi1, Frzi2, Frzi3, Frzi4 sont tous inactifs.

Dans un mode de réalisation préférentiel, le second moyen de détection DETECT2 comporte des seconds moyens de mémorisation MEM2 comptant le nombre de fois où le signal différentiel de courant dSi(t) est successivement supérieur au seuil absolu L1_absolute, au moins une fois, puis croissant avec un taux de variation supérieur au seuil de variation relative L1_relative. Le second signal d'aide à la décision N2 est alors fourni si le nombre de fois où le signal différentiel de courant dSi(t) est successivement supérieur au seuil absolu L1_absolute, puis croissant avec un taux de variation supérieur à un seuil de variation relative L1_relative, est supérieur à un second seuil de comptage Sm2. Autrement dit, le second signal d'aide à la décision N2 est alors fourni si la valeur mémorisée dans MEM2 est supérieure à un second seuil de comptage Sm2.

La seconde durée d'analyse W2 est comprise entre 0 et 0,2 secondes. De préférence, la seconde durée d'analyse W2 est dépendante du second seuil de comptage Sm2 ainsi que de la fréquence du réseau électrique. A titre d'exemple, pour une fréquence réseau fixe égale à 400 Hz, la seconde durée d'analyse W2 est égale au produit entre la valeur du deuxième seuil de comptage Sm2 et 1,25 ms, le produit étant au maximum égal à 0,1 secondes. Pour une fréquence réseau variable entre 360 Hz et 800 Hz, la seconde durée d'analyse W2 est égale au produit entre la valeur du deuxième seuil de comptage Sm2 et 1,389 ms, le produit étant au maximum égal à 0,1 secondes.

Suivant un mode de réalisation du second moyen de détection DETECT2, des interruptions de la croissance du signal différentiel de courant dSi(t), avec un taux de variation supérieur à un seuil de variation relative L1_relative, étant tolérées sur moins de quatre demi-alternances.

Un troisième moyen de détection DETECT3 est destiné à détecter des arcs salins de moyenne intensité. Ledit moyen de détection fournit un troisième signal d'aide à la décision N3 si, sur une troisième durée d'analyse W3, le signal différentiel de courant dSi(t) est supérieur à un premier seuil salin L3, au moins une fois, tout en n'ayant pas été inférieur à un premier seuil série L4 sur les deux demi-alternances précédentes du courant électrique alternatif. Ainsi, la variation de surface du courant est comparée à un seuil positif, reflétant un "saut" de courant, et à un seuil négatif, caractérisant une rupture de consommation. Un "saut" de courant, sans rupture de consommation sur les deux demi-alternances précédentes, active un signal qui est mémorisé pour une durée prédéfinie. En outre, le troisième signal d'aide à la décision N3 est fourni si les premier, second, troisième et quatrième signaux d'inhibition adaptatifs Frzi1, Frzi2, Frzi3, Frzi4 sont tous inactifs.

Dans un mode de réalisation préférentiel, le troisième moyen de détection DETECT3 comporte des troisièmes moyens de mémorisation MEM3 comptant le nombre de fois où le signal différentiel de courant dSi(t) est supérieur à un premier seuil salin L3, au moins une fois, tout en n'ayant pas été inférieur à un premier seuil série L4. Le troisième signal d'aide à la décision N3 est alors fourni si le nombre de fois où le signal différentiel de courant dSi(t) est supérieur à un premier seuil salin L3, tout en n'ayant pas été inférieur, sur le 2 demi-alternances précédentes, à un premier seuil série L4, est supérieur à un troisième seuil de comptage Sm3. Autrement dit, le troisième signal d'aide à la décision N3 est alors fourni si la valeur mémorisée dans MEM3 est supérieure à un troisième seuil de comptage Sm3.

La troisième durée d'analyse W3 est comprise entre 0 et 0,2 secondes. De préférence, la troisième durée d'analyse W3 est dépendante du troisième seuil de comptage Sm3 ainsi que la fréquence du réseau électrique. A titre d'exemple, pour une fréquence réseau fixe égale à 400 Hz, la troisième durée d'analyse W3 est égale au produit entre la valeur du troisième seuil de comptage Sm3 et 1,25 ms, le produit étant au maximum égal à 0,1 secondes. Pour une fréquence réseau variable entre 360 Hz et 800 Hz, la troisième durée d'analyse W3 est égale au produit entre la valeur du troisième seuil de comptage Sm3 et 1,389 ms, le produit étant au maximum égal à 0,1 secondes.

Un quatrième moyen de détection DETECT4 est destiné à détecter des arcs série apparaissant dans un circuit avec beaucoup de ruptures de courant. Ledit moyen de détection fournit un quatrième signal d'aide à la décision N4 si, sur une quatrième durée d'analyse W4, le signal différentiel de courant dSi(t) est inférieur à un premier seuil série L4, au moins une fois, tout en n'ayant pas été supérieur à un premier seuil salin L3 au cours des deux demi-alternances précédentes du courant électrique alternatif I. Ainsi, la variation de surface du courant est comparée à un seuil négatif, caractérisant une rupture de consommation, et à un seuil positif, reflétant un "saut" de courant. Une rupture de consommation, sans "saut" de courant sur les deux demi-alternances précédentes, active un signal qui est mémorisé pour une durée prédéfinie. En outre, le quatrième signal d'aide à la décision N4 est fourni si les premier, second, troisième et quatrième signaux d'inhibition adaptatifs Frzi1, Frzi2, Frzi3, Frzi4 sont tous inactifs.

Dans un mode de réalisation préférentiel, le quatrième moyen de détection DETECT4 comporte des quatrièmes moyens de mémorisation MEM4 comptant le nombre de fois où le signal différentiel de courant dSi(t) est inférieur à un premier seuil série L4, au moins une fois, tout en n'ayant pas été supérieur à un premier seuil salin L3. Le quatrième signal d'aide à la décision N4 est alors fourni si le nombre de fois où le signal différentiel de courant dSi(t) est inférieur à un premier seuil série L4, tout en n'ayant pas été supérieur à un premier seuil salin L3, est supérieur à un quatrième seuil de comptage Sm4. Autrement dit, le quatrième signal d'aide à la décision N4 est alors fourni si la valeur mémorisée dans MEM4 est supérieure à un quatrième seuil de comptage Sm4.

La quatrième durée d'analyse W4 est comprise entre 0 et 0,2 secondes. De préférence, la quatrième durée d'analyse W4 est dépendante du seuil de comptage ainsi que la fréquence du réseau électrique. A titre d'exemple, pour une fréquence réseau fixe égale à 400 Hz, la quatrième durée d'analyse W4 est égale au produit entre la valeur du quatrième seuil de comptage Sm4 et 1,25 ms, le produit étant au maximum égal à 0,1 secondes. Pour une fréquence réseau variable entre 360 Hz et 800 Hz, la quatrième durée d'analyse W4 est égale au produit entre la valeur du quatrième seuil de comptage Sm4 et 1,389 ms, le produit étant au maximum égal à 0,1 secondes.

Un cinquième moyen de détection DETECT5 destiné à détecter des arcs salins de forte intensité. Ledit moyen de détection fournit un cinquième signal d'aide à la décision N5 si, sur une cinquième durée d'analyse W5, le signal différentiel de courant dSi(t) subit successivement, au moins une fois, une première augmentation très forte, où ledit signal est supérieur à un second seuil salin L5-1, puis une seconde augmentation moins important que la première augmentation, où ledit signal est inférieur à un second seuil salin bis L5-2, et enfin une forte diminution, où ledit signal est inférieur à un troisième seuil salin L5-3. En outre le premier signal d'inhibition adaptatif Frz1 est inactif. Le second seuil salin L5-1 est supérieur ou égal au second seuil salin bis L5-2 et ledit second seuil salin bis étant supérieur au troisième seuil salin L5-3. Ainsi, la variation de surface est comparée à un seuil positif, reflétant un "saut" de courant de forte intensité, et à un seuil négatif, caractérisant une baisse de courant de forte intensité. Un "saut" de courant sur la 1^{ère} demi-alternance, suivi, sur la 2^{ème} demi-alternance, d'un courant d'intensité quasi stable, puis terminé, sur la 3^{ème} demi-alternance, par une baisse du courant, active un signal qui est mémorisé pour une durée prédéfinie.

Dans un mode de réalisation préférentiel, le cinquième moyen de détection DETECT5 comporte des cinquièmes moyens de mémorisation MEM5 comptant le nombre de fois où le signal différentiel de courant dSi(t) subit successivement une première augmentation très forte, où ledit signal est supérieur à un second seuil salin L5-1, une seconde augmentation, où ledit signal est inférieur à un second seuil salin bis L5-2, et une forte diminution, où ledit signal est inférieur à un troisième seuil salin L5-3. Le cinquième signal d'aide à la décision N5 est alors fourni si le nombre de fois où le signal différentiel de courant dSi(t) subit successivement une première augmentation très forte, où ledit signal est supérieur à un second seuil salin L5-1, une seconde augmentation moindre, où ledit signal est inférieur à un second seuil salin bis L5-2, et une forte diminution, où ledit signal est inférieur à un troisième seuil salin L5-3, est supérieur à un cinquième seuil de comptage Sm5. Autrement dit, le cinquième signal d'aide à la décision N5 est alors fourni si la valeur mémorisée dans MEM5 est supérieure à un cinquième seuil de comptage Sm5. La cinquième durée d'analyse W5 est comprise entre huit et douze secondes.

Un sixième moyen de détection DETECT6 est destiné à détecter des arcs série apparaissant dans un circuit avec peu de ruptures de courant. Un sixième moyen de détection DETECT6 peut fournir un sixième signal d'aide à la décision N6 si, sur une sixième durée d'analyse W6, le signal différentiel de courant dSi(t) subit successivement, au moins une fois, une première diminution très forte, où ledit signal est inférieur à un second seuil série L6-1, puis une seconde diminution moins important que la première diminution, où ledit signal est supérieur à un second seuil série bis L6-2, et enfin une forte augmentation, où ledit signal est supérieur à un troisième seuil série L6-3. En outre, les premier et cinquième signaux d'inhibition adaptatifs Frz1, Frz5 sont inactifs. Le second seuil série L6-1 est inférieur ou égal au second seuil série bis L6-2 et le second seuil série bis L6-2 est inférieur au troisième seuil série L6-3. Ainsi, la variation de surface est comparée à un seuil négatif, caractérisant une rupture de consommation, et à un seuil positif, caractérisant une reprise de consommation. Une rupture de consommation sur la 1^{ère} demi-alternance, suivie, sur la 2^{ème} demi-alternance, d'un courant d'intensité quasi stable, puis terminé, sur la 3^{ème} demi-alternance, par une reprise de la consommation active un signal qui est mémorisé pour une durée prédéfinie.

Dans un mode de réalisation préférentiel, le sixième moyen de détection DETECT6 comporte des sixièmes moyens de mémorisation MEM6 comptant le nombre de fois où le signal différentiel de courant dSi(t) subit successivement une première diminution très forte, où ledit signal est inférieur à un second seuil série L6-1, une seconde diminution moindre, où ledit signal est supérieur à un second seuil série bis L6-2, et une forte augmentation, où ledit signal est supérieur à un troisième seuil série L6-3. Le sixième signal d'aide à la décision N6 est alors fourni si le nombre de fois où le signal différentiel de courant dSi(t) subit successivement une première diminution très forte, où ledit signal est inférieur à un second seuil série L6-1, une seconde diminution moindre, où ledit signal est supérieur à un second seuil série bis L6-2, et une forte augmentation, où ledit signal est supérieur à un troisième seuil série L6-3, est supérieur à un sixième seuil de comptage Sm6. Autrement dit, le sixième signal d'aide à la décision N6 est alors fourni si la valeur mémorisée dans MEM6 est supérieure à un sixième seuil de comptage Sm6. La sixième durée d'analyse W6 est comprise entre une demi-seconde et une seconde et demie.

Les moyens de décision 3 déterminent, en fonction de l'état des signaux d'aide à la décision N1, N2, N3,..., Nn de l'instant de coupure de l'installation électrique, notamment en fournissant un signal de déclenchement Trip.

Comme représenté sur la figure 11, le dispositif de détection 10 est particulièrement destiné à un dispositif de coupure 40, tel que un disjoncteur ou un interrupteur. Ledit dispositif de coupure 40 comprend un mécanisme d'ouverture 32 de contacts électriques 30 placés en série sur des lignes ou conducteurs électriques 25. Le dispositif de coupure comprend aussi un relais de commande 31 relié au dispositif de détection tel que défini ci-dessus. Le relais de commande 31 est destiné à recevoir au moins un signal de déclenchement Trip des moyens de décision 3 du dispositif de détection 10. Le signal de déclenchement Trip provoque l'ouverture des contacts électriques 30 en cas de défaut électrique observé. Le dispositif de coupure 40 peut comprendre des moyens de détection thermique et/ou des moyens de détection électromagnétique. Selon une variante de réalisation, le dispositif de coupure 40 comprend aussi des moyens de détection et de déclenchement électronique.

Dans un mode particulier de réalisation, la coupure est obtenue grâce à un actionneur électromagnétique en prise directe avec le mécanisme d'ouverture de contacts. Dans un second mode particulier de réalisation, la coupure est obtenue avec un dispositif électronique de puissance.

L'invention est relative à un procédé de détection d'arc mettant en oeuvre un dispositif de détection d'arc tel que décrit ci-dessus.

Telle que représenté sur la figure 12, une première étape A du procédé de détection consiste à mesurer un courant électrique alternatif I et une tension alternative U avec des moyens de mesure 1, 4.

Une seconde étape B, consiste à fournir, avec des moyens de calcul des moyens d'analyse 2, au rythme d'un signal de séquencement Seq, une intégrale INT d'une valeur absolue ABS du courant électrique alternatif I et de la tension électrique alternative U sur au moins une demi-alternance.

Une troisième étape C dudit procédé consiste à fournir un signal d'intégration en courant Si(t) et un signal d'intégration en tension Su(t).

Selon un mode de réalisation particulier, le procédé de détection synchronise, de préférence, le signal de séquencement Seq avec le passage à zéro de la tension alternative U.

Une quatrième étape D du procédé consiste à fournir un signal différentiel de courant dSi(t), représentatif de la différence entre un premier signal d'intégration en courant Si(t) et un second signal d'intégration en courant Si(t-T) mesuré sur une période T avant ledit premier signal d'intégration. Par ailleurs, est fourni un signal différentiel de tension dSu(t), représentatif de la différence entre un premier signal d'intégration en tension Su(t) et un second signal d'intégration en tension Su(t-T) mesuré sur une période avant ledit premier signal d'intégration.

De préférence, des moyens de différenciation DIFF fournissent les signaux différentiels de courant dSi(t) et de tension dSu(t)

Une cinquième étape E consiste à fournir un ou plusieurs signaux d'inhibition adaptatifs Frzi1, Frzi2, Frzi3, ...., Frzin par une unité d'inhibition INHIBIT des moyens d'analyse 2.

Une cinquième étape F consite à fournir au moins un signal d'aide à la décision N 1, N2, N3, ...., Nk en fonction d'au moins un signal d'inhibition adaptatif Frzi1, Frzi2, Frzi3, ...., Frzin et du signal différentiel de courant dSi(t) ou du signal d'intégration en courant Si(t). Les signaux d'aide à la décision N1, N2, N3, ...., Nk sont fournis de préférence par les moyens de détection DETECT1, DETECT2, DETECT3, DETECT4,... , DETECTk.

Le procédé de détection d'arc, dans une ultime étape G, comporte la fourniture d'un signal de déclenchement Trip. Le signal de déclenchement Trip est fourni de préférence par une unité de décision DECIDE des moyens de décision 3. Lesdits moyens de décision 3 sont connectés aux moyens d'analyse 2.

Le procédé de détection d'arc fournit un premier signal d'inhibition adaptatif Frz1 actif lorsque le signal de séquencement Seq n'est plus synchronisé sur le passage à zéro de la tension électrique alternative U.

Le procédé de détection d'arc fournit un second signal d'inhibition adaptatif Frzi2 actif lorsque le signal différentiel de courant dSi(t) suit la même variation que le signal différentiel de tension dSu(t) pendant une durée d'analyse du courant I.

Le procédé de détection d'arc fournit un troisième signal d'inhibition adaptatif Frzi3 actif lorsque le signal différentiel de courant dSi(t) décroît pour atteindre une valeur nulle après avoir subit une brutale augmentation.

Le procédé de détection d'arc fournit un quatrième signal d'inhibition adaptatif Frzi4 actif lorsque le courant électrique alternatif (I) est de forme asymétrique par rapport à une ligne de zéro de courant, l'asymétrique tendant à diminuer pour s'annuler.

Un cinquième signal d'inhibition adaptatif Frzi5 actif est fourni lorsqu'une diminution du signal différentiel de courant dSi(t) est supérieure à la valeur moyenne du signal d'intégration en courant Si(t).

Le procédé de détection d'arc fournit un premier signal d'aide à la décision N1 si, sur une première durée d'analyse W1, le signal d'intégration en courant dSi(t) est supérieur à un seuil de saturation SA, au moins une fois. Le premier signal d'aide à la décision N1 est fourni si le premier signal d'inhibition adaptatif Frzi1 est inactif.

Le procédé de détection d'arc fournit un second signal d'aide à la décision N2 si, sur une seconde durée d'analyse W2, le signal différentiel de courant dSi(t) est successivement supérieur à un seuil absolu L1_absolute, au moins une fois, croissant avec un taux de variation supérieur à un seuil de variation relative L1_relative. Le second signal d'aide à la décision N2 est fourni si les premier, second, troisième et quatrième signaux d'inhibition adaptatifs Frzi1, Frzi2, Frzi3, Frzi4 sont tous inactifs.

Le procédé de détection d'arc fournit un troisième signal d'aide à la décision N3 si, sur une troisième durée d'analyse W3, le signal différentiel de courant dSi(t) est supérieur à un premier seuil salin L3, au moins une fois, tout en n'ayant pas été inférieur à un premier seuil série L4 sur les deux demi-alternances précédentes du courant électrique alternatif. En outre, les premier, second, troisième et quatrième signaux d'inhibition adaptatifs Frzi1, Frzi2, Frzi3, Frzi4 sont tous inactifs.

Le procédé de détection d'arc fournit quatrième signal d'aide à la décision N4 si, sur une quatrième durée d'analyse W4, le signal différentiel de courant dSi(t) est inférieur à un premier seuil série L4, au moins une fois, tout en n'ayant pas été supérieur à un premier seuil salin L3 sur les deux demi-alternances précédentes du courant électrique alternatif. En outre, les premier, second, troisième et quatrième signaux d'inhibition adaptatifs Frzi1, Frzi2, Frzi3, Frzi4 sont tous inactifs.

Le procédé de détection d'arc fournit cinquième signal d'aide à la décision N5 si, sur une cinquième durée d'analyse W5, le signal différentiel de courant dSi(t) subit au moins une fois successivement une première augmentation très forte où ledit signal est supérieur à un second seuil salin L5-1, une seconde augmentation moins importante que la première augmentation où ledit signal est inférieur à un second seuil salin bis L5-2, et une forte diminution où ledit signal est inférieur à un troisième seuil salin L5-3. En outre, le premier signal d'inhibition Frzi1 est inactif. Le second seuil salin L5-1 est supérieur ou égal au second seuil salin bis L5-2 et le second seuil salin bis L5-2 est supérieur au troisième seuil salin L5-3.

Le procédé de détection d'arc fournit un sixième signal d'aide à la décision N6 si, sur une sixième durée d'analyse W6, le signal différentiel de courant dSi(t) subit au moins une fois successivement, une première diminution très forte, où ledit signal est inférieur à un second seuil série L6-1, une seconde diminution moins importante que la première diminution, où ledit signal est supérieur à un second seuil série bis L6-2, une forte augmentation, où ledit signal est supérieur à un troisième seuil série L6-3. En outre, les premier et cinquième signaux d'inhibition Frzi1, Frzi5 sont inactifs. Le second seuil série L6-1 est inférieur ou égal au second seuil série bis L6-2 et le second seuil série bis L6-2 est inférieur au troisième seuil série L6-3.

## Revendications

1. Dispositif de détection (10) d'arc électrique comprenant :
• des moyens de mesure (1, 4) d'un courant électrique alternatif (I) et d'une tension alternative (U),
• des moyens d'analyse (2) reliés aux moyens de mesure (1, 4), et comportant
• des moyens de calcul pour calculer, au rythme d'un signal de séquencement (Seq), une intégrale (INT) d'une valeur absolue (ABS) :
• du courant électrique alternatif (I) sur au moins une demi-alternance, et fournir un signal d'intégration en courant (Si(t)),
• de la tension électrique alternative (U) sur au moins une demi-alternance, et fournir un signal d'intégration en tension (Su(t)),
• des moyens de différenciation (DIFF) fournissant
• un signal différentiel de courant (dSi(t)), représentatif de la différence entre un premier signal d'intégration en courant (Si(t)) et un second signal d'intégration en courant (Si(t-T)) mesuré sur une période (T) avant ledit premier signal d'intégration,
• un signal différentiel de tension (dSu(t)), représentatif de la différence entre un premier signal d'intégration en tension (Su(t)) et un second signal d'intégration en tension (Su(t-T)) mesuré sur une période avant ledit premier signal d'intégration,
• des moyens de décision (3) connectés aux moyens d'analyse (2) et destinés à envoyer au moins un signal de déclenchement (Trip), les moyens de décision (3) comportant des moyens de détection (DETECT 1, DETECT 2, DETECT 3, DETECT 4,... , DETECT k) destinés à fournir chacun au moins un signal d'aide à la décision (N1, N2, N3, ...., Nk), et comportant une unité de décision (DECIDE) destinée à fournir au moins un signal de déclenchement (Trip),
**caractérisé en ce que** les moyens de décision (3) comportent une unité d'inhibition (INHIBIT) fournissant des signaux d'inhibition adaptatifs (Frzi1, Frzi2, Frzi3, ...., Frzin) aux moyens de détection (DETECT 1, DETECT 2, DETECT 3, DETECT 4,... , DETECT k),
• lesdites au moins un signal d'aide à la décision (N1, N2, N3, ...., Nk) étant en fonction d'au moins un signal d'inhibition adaptatif (Frzi1, Frzi2, Frzi3, ...., Frzin), et du signal différentiel de courant (dSi(t)) ou du signal d'intégration en courant (Si(t)),
• ledit au moins un signal de déclenchement (Trip) étant en fonction de la valeur de signaux d'aide à la décision (N1, N2, N3, ...., Nk).

2. Dispositif de détection selon la revendication 1, **caractérisé en ce que** le signal de séquencement (Seq) est synchronisé avec le passage à zéro de la tension alternative (U).

3. Dispositif de détection selon la revendication 2, **caractérisé en ce qu'**un premier signal d'inhibition adaptatif (Frz1) est actif lorsque le signal de séquencement (Seq) n'est plus synchronisé sur le passage à zéro de la tension électrique alternative (U).

4. Dispositif de détection selon la revendication 1 ou 2, **caractérisé en ce qu'**un second signal d'inhibition adaptatif (Frzi2) est actif lorsque le signal différentiel de courant (dSi(t)) suit la même variation que le signal différentiel de tension (dSu(t)) pendant une durée d'analyse du courant (I).

5. Dispositif de détection selon la revendication 1 ou 2, **caractérisé en ce qu'**un troisième signal d'inhibition adaptatif (Frzi3) est actif lorsque le signal différentiel de courant (dSi(t)) décroît pour atteindre une valeur nulle après avoir subit une brutale augmentation.

6. Dispositif de détection selon la revendication 1 ou 2, **caractérisé en ce qu'**un un quatrième signal d'inhibition adaptatif (Frzi4) est actif lorsque le courant électrique alternatif (I) est de forme asymétrique par rapport à une ligne de zéro de courant, l'asymétrique tendant à diminuer pour s'annuler.

7. Dispositif de détection selon la revendication 1 ou 2, **caractérisé en ce qu'**un cinquième signal d'inhibition adaptatif (Frzi5) est actif lorsqu'une diminution du signal différentiel de courant (dSi(t)) est supérieure à la valeur moyenne du signal d'intégration en courant (Si(t)).

8. Dispositif de détection selon la revendication 3, **caractérisé en ce qu'**un premier moyen de détection (DETECT1), destiné à détecter des arcs électriques de très forte intensité, fournit un premier signal d'aide à la décision (N1) si, sur une première durée d'analyse (W1) :
- le signal d'intégration en courant (dSi(t)) est supérieur à un seuil de saturation (SA), au moins une fois, et
- le premier signal d'inhibition adaptatif (Frzi1) est inactif.

9. Dispositif de détection selon la revendication 8, **caractérisé en ce que** le premier moyen de détection (DETECT1) comporte des premiers moyens de mémorisation (MEM1) comptant le nombre de fois où le signal d'intégration en courant (Si(t)) est supérieur au seuil de saturation (SA).

10. Dispositif de détection selon la revendication 9, **caractérisé en ce que** le premier moyen de détection (DETECT1) fournit un premier signal d'aide à la décision (N1) si le nombre de fois où le signal d'intégration en courant (Si(t)) est supérieur au seuil de saturation (SA), est supérieur à un premier seuil de comptage (Sm1).

11. Dispositif de détection selon l'une des revendications 8 à 10, **caractérisé en ce que** la première durée d'analyse (W1) est comprise entre 0 et 0,2 secondes.

12. Dispositif de détection selon les revendications 1 à 6, **caractérisé en ce qu'**un second moyen de détection (DETECT2), destiné à détecter des arcs électriques de forte intensité, fournit un second signal d'aide à la décision (N2) si, sur une seconde durée d'analyse (W2) :
- le signal différentiel de courant (dSi(t)) est successivement :
- supérieur à un seuil absolu (L1_absolute), au moins une fois,
- croissant avec un taux de variation supérieur à un seuil de variation relative (L1_relative), et
- les premier, second, troisième et quatrième signaux d'inhibition adaptatifs (Frzi1, Frzi2, Frzi3, Frzi4) sont inactifs.

13. Dispositif de détection selon la revendication 12, **caractérisé en ce que** le second moyen de détection (DETECT2) comporte des seconds moyens de mémorisation (MEM2) comptant le nombre de fois où le signal différentiel de courant (dSi(t)) est successivement supérieur au seuil absolu (L1_absolute), puis croissant avec un taux de variation supérieur au seuil de variation relative (L1_relative).

14. Dispositif de détection selon la revendication 13, **caractérisé en ce que** le second moyen de détection (DETECT2) fournit un second signal d'aide à la décision (N2) si le nombre de fois où le signal différentiel de courant (dSi(t)) est successivement supérieur au seuil absolu (L1_absolute), puis croissant avec un taux de variation supérieur à un seuil de variation relative (L1_relative), est supérieur à un second seuil de comptage (Sm2).

15. Dispositif de détection selon l'une des revendications 12 à 14, **caractérisé en ce que** la seconde durée d'analyse (W2) est comprise entre 0 et 0,2 secondes.

16. Dispositif de détection selon les revendications 1 à 6, **caractérisé en ce qu'**un troisième moyen de détection (DETECT3), destiné à détecter des arcs salins de moyenne intensité, fournit un troisième signal d'aide à la décision (N3) si, sur une troisième durée d'analyse (W3) :
- le signal différentiel de courant (dSi(t)) est supérieur à un premier seuil salin (L3), au moins une fois, tout en n'ayant pas été inférieur à un premier seuil série (L4) sur les deux demi-alternances précédentes du courant électrique alternatif, et
- les premier, second, troisième et quatrième signaux d'inhibition adaptatifs (Frzi1, Frzi2, Frzi3, Frzi4) sont inactifs.

17. Dispositif de détection selon la revendication 16, **caractérisé en ce que** le troisième moyen de détection (DETECT3) comporte des troisièmes moyens de mémorisation (MEM3) comptant le nombre de fois où le signal différentiel de courant (dSi(t)) est supérieur au premier seuil salin (L3), tout en n'ayant pas été inférieur à un premier seuil série (L4) sur les deux demi-alternances précédentes du courant électrique alternatif.

18. Dispositif de détection selon la revendication 17, **caractérisé en ce que** le troisième moyen de détection (DETECT3) fournit un troisième signal d'aide à la décision (N3) si le nombre de fois où le signal différentiel de courant (dSi(t)) est supérieur au premier seuil salin (L3), tout en n'ayant pas été inférieur à un premier seuil série (L4) sur les deux demi-alternances précédentes du courant électrique alternatif, est supérieur à un troisième seuil de comptage (Sm3).

19. Dispositif de détection selon l'une des revendications 16 à 18, **caractérisé en ce que** la troisième durée d'analyse (W3) est comprise entre 0 et 0,2 secondes.

20. Dispositif de détection selon les revendications 1 à 6, **caractérisé en ce qu'**un quatrième moyen de détection (DETECT4), destiné à détecter des arcs série apparaissant dans un circuit avec beaucoup de ruptures de courant, fournit un quatrième signal d'aide à la décision (N4) si, sur une quatrième durée d'analyse (W4) :
- le signal différentiel de courant (dSi(t)) est inférieur à un premier seuil série (L4), au moins une fois, tout en n'ayant pas été supérieur à un premier seuil salin (L3) sur les deux demi-alternances précédentes du courant électrique alternatif, et
- les premier, second, troisième et quatrième signaux d'inhibition adaptatifs (Frzi1, Frzi2, Frzi3, Frzi4) sont inactifs.

21. Dispositif de détection selon la revendication 20, **caractérisé en ce que** le quatrième moyen de détection (DETECT4) comporte des quatrièmes moyens de mémorisation (MEM4) comptant le nombre de fois où le signal différentiel de courant (dSi(t)) est inférieur au premier seuil série (L4), tout en ayant pas été supérieur au premier seuil salin (L3) sur les deux demi-alternances précédentes du courant électrique alternatif.

22. Dispositif de détection selon la revendication 21, **caractérisé en ce que** le quatrième moyen de détection (DETECT4) fournit un quatrième signal d'aide à la décision (N4) si le nombre de fois où le signal différentiel de courant (dSi(t)) est inférieur au premier seuil série (L4), tout en ayant pas été supérieur au premier seuil salin (L3) sur les deux demi-alternances précédentes du courant électrique alternatif, est supérieur à un quatrième seuil de comptage (Sm4).

23. Dispositif de détection selon l'une des revendications 20 à 22, **caractérisé en ce que** la quatrième durée d'analyse (W4) est comprise entre 0 et 0,2 secondes.

24. Dispositif de détection selon la revendication 3, **caractérisé en ce qu'**un cinquième moyen de détection (DETECT5), destiné à détecter des arcs salins de forte intensité, fournit un cinquième signal d'aide à la décision (N5) si, sur une cinquième durée d'analyse (W5) :
- le signal différentiel de courant (dSi(t)) subit au moins une fois successivement :
- une première augmentation très forte où ledit signal est supérieur à un second seuil salin (L5-1),
- une seconde augmentation moins importante que la première augmentation où ledit signal est inférieur à un second seuil salin bis (L5-2),
- une forte diminution où ledit signal est inférieur à un troisième seuil salin (L5-3),
le second seuil salin (L5-1) étant supérieur ou égal au second seuil salin bis (L5-2) et le second seuil salin bis (L5-2) étant supérieur au troisième seuil salin (L5-3), et
- le premier signal d'inhibition adaptatif (Frzi1) étant inactif.

25. Dispositif de détection selon la revendication 24, **caractérisé en ce que** le cinquième moyen de détection (DETECT5) comporte des cinquièmes moyens de mémorisation (MEM5) comptant le nombre de fois où le signal différentiel de courant (dSi(t)) subit successivement une première augmentation très forte, où ledit signal est supérieur à un second seuil salin (L5-1), une seconde augmentation moindre, où ledit signal est inférieur à un second seuil salin bis (L5-2), et une forte diminution, où ledit signal est inférieur à un troisième seuil salin (L5-3),

26. Dispositif de détection selon la revendication 25, **caractérisé en ce que** le cinquième moyen de détection (DETECT5) fournit un cinquième signal d'aide à la décision (N5) si le nombre de fois où le signal différentiel de courant (dSi(t)) subit successivement une première augmentation très forte, où ledit signal est supérieur, à un second seuil salin (L5-1), une seconde augmentation moindre, où ledit signal est inférieur à un second seuil salin bis (L5-2), et une forte diminution, où ledit signal est inférieur à un troisième seuil salin (L5-3), est supérieur à un cinquième seuil de comptage (Sm5).

27. Dispositif de détection selon l'une des revendications 24 à 26, **caractérisé en ce que** la cinquième durée d'analyse (W5) est comprise entre huit et douze secondes.

28. Dispositif de détection selon les revendications 3 et 7, **caractérisé en ce qu'**un sixième moyen de détection (DETECT6), destiné à détecter des arcs série apparaissant dans un circuit avec peu de ruptures de courant, fournit un sixième signal d'aide à la décision (N6) si, sur une sixième durée d'analyse (W6),
- le signal différentiel de courant (dSi(t)) subit au moins une fois successivement :
- une première diminution très forte, où ledit signal est inférieur à un second seuil série (L6-1),
- une seconde diminution moins importante que la première diminution, où ledit signal est supérieur à un second seuil série bis (L6-2),
- une forte augmentation, où ledit signal est supérieur à un troisième seuil série (L6-3),
le second seuil série (L6-1) étant inférieur ou égal au second seuil série bis (L6-2) et le second seuil série bis L6-2) étant inférieur au troisième seuil série (L6-3), et
- le premier et cinquième signaux d'inhibition (Frzi1, Frzi5) sont inactifs.

29. Dispositif de détection selon la revendication 28, **caractérisé en ce que** le sixième moyen de détection (DETECT6) comporte des sixièmes moyens de mémorisation (MEM6) comptant le nombre de fois où le signal différentiel de courant (dSi(t)) subit successivement une première diminution très forte, où ledit signal est inférieur à un second seuil série (L6-1), une seconde diminution moindre, où ledit signal est supérieur à un second seuil série bis (L6-2), et une forte augmentation, où ledit signal est supérieur à un troisième seuil série (L6-3).

30. Dispositif de détection selon la revendication 29, **caractérisé en ce que** le sixième moyen de détection (DETECT6) fournit un sixième signal d'aide à la décision (N6) si le nombre de fois où le signal différentiel de courant (dSi(t)) subit successivement une première diminution très forte, où ledit signal est inférieur à un second seuil série (L6-1), une seconde diminution moindre, où ledit signal est supérieur à un second seuil série bis (L6-2), et une forte augmentation, où ledit signal est supérieur à un troisième seuil série (L6-3), est supérieur à un sixième seuil de comptage (Sm6).

31. Dispositif de détection selon l'une des revendications 28 à 30, **caractérisé en ce que** la sixième durée d'analyse (W6) est comprise entre une demi-seconde et une seconde et demie.

32. Dispositif de détection selon l'une quelconque des revendications précédentes, **caractérisé en ce que** des moyens d'analyse (2) comportent un moyen pour déterminer la valeur maximale (MAX) du courant électrique alternatif, au rythme d'un signal de séquencement (Seq).

33. Dispositif de détection selon l'une quelconque des revendications précédentes, **caractérisé en ce qu'**il comporte des moyens d'échantillonnage des signaux mesurés de courant (I) et de tension (U) et comporte des moyens de stockage desdits signaux échantillonnés.

34. Dispositif de détection selon l'une quelconque des revendications précédentes, **caractérisé en ce qu'**il comporte des moyens d'échantillonnage des signaux d'intégration de courant (Si(t)) et de tension (Su(t)) et comporte des moyens de stockage desdits signaux échantillonnés.

35. Dispositif de détection selon l'une quelconque des revendications précédentes, **caractérisé en ce que** le fonctionnement de chaque moyen de calcul des signaux d'intégration et différentiels de courant et de tension est synchronisé avec l'envoi du signal de séquencement (Seq).

36. Dispositif de détection selon l'une quelconque des revendications précédentes, **caractérisé en ce que** le fonctionnement de chaque moyen de détection (DETECT1, DETECT2, DETECT3, DETECT4, DETECTk) est synchronisé avec l'envoi du signal de séquencement (Seq).

37. Dispositif de coupure (40) comprenant un mécanisme d'ouverture (32) de contacts électriques (30) et un relais de commande (31) relié à un dispositif de détection (10) selon l'une quelconque des revendications précédentes, **caractérisé en ce que** le relais de commande (31) est destiné à recevoir au moins un signal de déclenchement (Trip) des moyens de décision (3) du dispositif de détection (10).

38. Procédé de détection d'arc électrique comportant :
• la mesure d'un courant électrique alternatif (I) et une tension alternative (U) avec des moyens de mesure (1, 4),
• le calcul au rythme d'un signal de séquencement (Seq),
• d'une intégrale (INT) d'une valeur absolue (ABS) du courant électrique alternatif (I) et de la tension électrique alternative (U) sur au moins une demi-alternance
• d'un signal d'intégration en courant (Si(t)) et un signal d'intégration en tension (Su(t)),
• la fourniture d'un signal différentiel de courant (dSi(t)), représentatif de la différence entre un premier signal d'intégration en courant (Si(t)) et un second signal d'intégration en courant (Si(t-T)) mesuré sur une période (T) avant ledit premier signal d'intégration,
• la fourniture d'un signal différentiel de tension (dSu(t)), représentatif de la différence entre un premier signal d'intégration en tension (Su(t)) et un second signal d'intégration en tension (Su(t-T)) mesuré sur une période avant ledit premier signal d'intégration,
**caractérisé en ce qu'**il comporte la fourniture d'un signal de déclenchement (Trip) dépendant de la valeur de signaux d'aide à la décision (N1, N2, N3, ...., Nk), chaque signal d'aide à la décision (N1, N2, N3, ...., Nk) étant déterminé en fonction :
• de la fourniture d'au moins un signal d'inhibition adaptatif (Frzi1, Frzi2, Frzi3, ...., Frzin) et
• du signal différentiel de courant (dSi(t)) ou du signal d'intégration en courant (Si(t)).

39. Procédé de détection d'arc selon la revendication 38, **caractérisé en ce qu'**il synchronise le signal de séquencement (Seq) avec le passage à zéro de la tension alternative (U).

40. Procédé de détection d'arc selon la revendication 39, **caractérisé en ce qu'**il comporte la fourniture d'un premier signal d'inhibition adaptatif (Frz1) actif lorsque le signal de séquencement (Seq) n'est plus synchronisé sur le passage à zéro de la tension électrique alternative (U).

41. Procédé de détection d'arc selon la revendication 38 ou 39, **caractérisé en ce qu'**il comporte la fourniture d'un second signal d'inhibition adaptatif (Frzi2) actif lorsque le signal différentiel de courant (dSi(t)) suit la même variation que le signal différentiel de tension (dSu(t)) pendant une durée d'analyse du courant (I).

42. Procédé de détection d'arc selon la revendication 38 ou 39, **caractérisé en ce qu'**il comporte la fourniture d'un troisième signal d'inhibition adaptatif (Frzi3) actif lorsque le signal différentiel de courant (dSi(t)) décroît pour atteindre une valeur nulle après avoir subit une brutale augmentation.

43. Procédé de détection d'arc selon la revendication 38 ou 39, **caractérisé en ce qu'**il comporte la fourniture d'un quatrième signal d'inhibition adaptatif (Frzi4) actif lorsque le courant électrique alternatif (I) est de forme asymétrique par rapport à une ligne de zéro de courant, l'asymétrique tendant à diminuer pour s'annuler.

44. Procédé de détection d'arc selon la revendication 38 ou 39, **caractérisé en ce qu'**il comporte la fourniture d'un cinquième signal d'inhibition adaptatif (Frzi5) actif lorsqu'une diminution du signal différentiel de courant (dSi(t)) est supérieure à la valeur moyenne du signal d'intégration en courant (Si(t)).

45. Procédé de détection d'arc selon la revendication 40, **caractérisé en ce qu'**il comporte la fourniture d'un premier signal d'aide à la décision (N1) si, sur une première durée d'analyse (W1) :
- le signal d'intégration en courant (dSi(t)) est supérieur à un seuil de saturation (SA), au moins une fois, et
- le premier signal d'inhibition adaptatif (Frzi1) est inactif.

46. Procédé de détection d'arc selon les revendications 38 à 43, **caractérisé en ce qu'**il comporte la fourniture d'un second signal d'aide à la décision (N2) si, sur une seconde durée d'analyse (W2) :
- le signal différentiel de courant (dSi(t)) est successivement :
- supérieur à un seuil absolu (L1_absolute), au moins une fois,
- croissant avec un taux de variation supérieur à un seuil de variation relative (L1_relative), et
- les premier, second, troisième et quatrième signaux d'inhibition adaptatifs (Frzi1, Frzi2, Frzi3, Frzi4) sont inactifs.

47. Procédé de détection d'arc selon les revendications 38 à 43, **caractérisé en ce qu'**il comporte la fourniture d'un troisième signal d'aide à la décision (N3) si, sur une troisième durée d'analyse (W3) :
- le signal différentiel de courant (dSi(t)) est supérieur à un premier seuil salin (L3), au moins une fois, tout en n'ayant pas été inférieur à un premier seuil série (L4) sur les deux demi-alternances précédentes du courant électrique alternatif, et
- les premier, second, troisième et quatrième signaux d'inhibition adaptatifs (Frzi1, Frzi2, Frzi3, Frzi4) sont inactifs.

48. Procédé de détection d'arc selon les revendications 38 à 43, **caractérisé en ce qu'**il comporte la fourniture d'un quatrième signal d'aide à la décision (N4) si, sur une quatrième durée d'analyse (W4) :
- le signal différentiel de courant (dSi(t)) est inférieur à un premier seuil série (L4), au moins une fois, tout en n'ayant pas été supérieur à un premier seuil salin (L3) sur les deux demi-alternances précédentes du courant électrique alternatif, et
- les premier, second, troisième et quatrième signaux d'inhibition adaptatifs (Frzi1, Frzi2, Frzi3, Frzi4) sont inactifs.

49. Procédé de détection d'arc selon la revendication 40, **caractérisé en ce qu'**il comporte la fourniture d'un cinquième signal d'aide à la décision (N5) si, sur une cinquième durée d'analyse (W5) :
- le signal différentiel de courant (dSi(t)) subit au moins une fois successivement :
- une première augmentation très forte où ledit signal est supérieur à un second seuil salin (L5-1),
- une seconde augmentation moins importante que la première augmentation où ledit signal est inférieur à un second seuil salin bis (L5-2),
- une forte diminution où ledit signal est inférieur à un troisième seuil salin (L5-3),
le second seuil salin (L5-1) étant supérieur ou égal au second seuil salin bis (L5-2) et le second seuil salin bis (L5-2) étant supérieur au troisième seuil salin (L5-3), et
- le premier signal d'inhibition adaptatif (Frzi1) étant inactif.

50. Procédé de détection d'arc selon les revendications 40 et 44, **caractérisé en ce qu'**il comporte la fourniture d'un sixième signal d'aide à la décision (N6) si, sur une sixième durée d'analyse (W6),
- le signal différentiel de courant (dSi(t)) subit au moins une fois successivement :
- une première diminution très forte, où ledit signal est inférieur à un second seuil série (L6-1),
- une seconde diminution moins importante que la première diminution, où ledit signal est supérieur à un second seuil série bis (L6-2),
- une forte augmentation, où ledit signal est supérieur à un troisième seuil série (L6-3),
le second seuil série (L6-1) étant inférieur ou égal au second seuil série bis (L6-2) et le second seuil série bis (L6-2) étant inférieur au troisième seuil série (L6-3), et
- les premier et cinquième signaux d'inhibition adaptatifs (Frzi1, Frzi5) sont inactifs.

## Patentansprüche

1. Vorrichtung (10) zur Erfassung eines Lichtbogens, umfassend:
- Mittel (1, 4) zum Messen eines elektrischen Wechselstroms (I) und einer Wechselspannung (U),
- Analysemittel (2), die mit den Messmitteln (1, 4) verbunden sind und umfassen:
- Berechnungsmittel, um im Rhythmus eines Sequenzierungssignals (Seq) ein Integral (INT) eines Absolutwerts (ABS) zu berechnen:
- des elektrischen Wechselstroms (I) auf mindestens einer Halbwelle, und Lieferung eines Stromintegrationssignals (Si(t)),
- der elektrischen Wechselspannung (U) auf mindestens einer Halbwelle, und Lieferung eines Spannungsintegrationssignals (Su(t)),
- Differenzierungsmittel (DIFF), die Folgendes liefern :
- ein Stromdifferentialsignal (dSi(t)), das für die Differenz zwischen einem ersten Stromintegrationssignal (Si(t)) und einem zweiten Stromintegrationssignal (Si(t-T)), gemessen auf einer Periode (T) vor dem ersten Integrationssignal, repräsentativ ist,
- ein Spannungsdifferentialsignal (dSu(t)), das für die Differenz zwischen einem ersten Spannungsintegrationssignal (Su(t)) und einem zweiten Spannungsintegrationssignal (Su(t-T)), gemessen auf einer Periode vor dem ersten Integrationssignal, repräsentativ ist,
- Entscheidungsmittel (3), die an die Analysemittel (2) angeschlossen und dazu bestimmt sind, mindestens ein Auslösesignal (Trip) zu senden, wobei die Entscheidungsmittel (3) Erfassungsmittel (DETECT 1, DETECT 2, DETECT 3, DETECT 4, ..., DETECT k) umfassen, die dazu bestimmt sind, jeweils mindestens ein Signal zur Entscheidungshilfe (N1, N2, N3, ..., Nk) zu liefern, und umfassend eine Entscheidungseinheit (DECIDE), die dazu bestimmt ist, mindestens ein Auslösesignal (Trip) zu liefern,
**dadurch gekennzeichnet, dass** die Entscheidungsmittel (3) eine Sperreinheit (INHIBIT) umfassen, die adaptative Sperrsignale (Frzi1, Frzi2, Frzi3, ..., Frzin) an die Erfassungsmittel (DETECT 1, DETECT 2, DETECT 3, DETECT 4, ..., DETECT k) liefern,
- wobei das mindestens eine Signal zur Entscheidungshilfe (N1, N2, N3, ... Nk) von mindestens einem adaptativen Sperrsignal (Frzi1, Frzi2, Frzi3, ... Frzin) und von dem Stromdifferentialsignal (dSi(t)) oder dem Stromintegrationssignal (Si(t)) abhängt,
- wobei das mindestens eine Auslösesignal (Trip) von dem Wert von Signalen zur Entscheidungshilfe (N1, N2, N3, ..., Nk) abhängt.

2. Erfassungsvorrichtung nach Anspruch 1, **dadurch gekennzeichnet, dass** das Sequenzierungssignal (Seq) mit dem Durchgang der Wechselspannung (U) bei Null synchronisiert ist.

3. Erfassungsvorrichtung nach Anspruch 2, **dadurch gekennzeichnet, dass** ein erstes adaptatives Sperrsignal (Frzi1) aktiv ist, wenn das Sequenzierungssignal (Seq) nicht mehr mit dem Durchgang der elektrischen Wechselspannung (U) bei Null synchronisiert ist.

4. Erfassungsvorrichtung nach Anspruch 1 oder 2, **dadurch gekennzeichnet, dass** ein zweites adaptatives Sperrsignal (Frzi2) aktiv ist, wenn das Stromdifferentialsignal (dSi(t)) derselben Variation wie das Spannungsdifferentialsignal (dSu(t)) während einer Analysedauer des Stroms (I) folgt.

5. Erfassungsvorrichtung nach Anspruch 1 oder 2, **dadurch gekennzeichnet, dass** ein drittes adaptatives Sperrsignal (Frzi3) aktiv ist, wenn das Stromdifferentialsignal (dSi(t)) abnimmt, um einen Nullwert zu erreichen, nachdem es einer starken Erhöhung ausgesetzt war.

6. Erfassungsvorrichtung nach Anspruch 1 oder 2, **dadurch gekennzeichnet, dass** ein viertes adaptatives Sperrsignal (Frzi4) aktiv ist, wenn der elektrische Wechselstrom (I) von asymmetrischer Form in Bezug zu einer Stromnulllinie ist, wobei die Asymmetrie dazu neigt, sich zu verringern, um zu verschwinden.

7. Erfassungsvorrichtung nach Anspruch 1 oder 2, **dadurch gekennzeichnet, dass** ein fünftes adaptatives Sperrsignal (Frzi5) aktiv ist, wenn eine Verringerung des Stromdifferentialsignals (dSi(t)) größer als der durchschnittliche Wert des Stromintegrationssignals (Si(t)) ist.

8. Erfassungsvorrichtung nach Anspruch 3, **dadurch gekennzeichnet, dass** ein erstes Erfassungsmittel (DETECT1), das dazu bestimmt ist, Lichtbögen mit sehr großer Stärke zu erfassen, ein erstes Signal zur Entscheidungshilfe (N1) liefern, wenn während einer ersten Analysedauer (W1):
- das Stromintegrationssignal (dSi(t)) zumindest einmal größer als eine Sättigungsschwelle (SA) ist, und
- das erste adaptative Sperrsignal (Frzi1) inaktiv ist.

9. Erfassungsvorrichtung nach Anspruch 8, **dadurch gekennzeichnet, dass** das erste Erfassungsmittel (DETECT1) erste Speichermittel (MEM1) umfasst, die die Anzahl von Malen zählen, an denen das Stromintegrationssignal (Si(t)) größer als die Sättigungsschwelle (SA) ist.

10. Erfassungsvorrichtung nach Anspruch 9, **dadurch gekennzeichnet, dass** das erste Erfassungsmittel (DETECT1) ein erstes Signal zur Entscheidungshilfe (N1) liefert, wenn die Anzahl von Malen, an denen das Stromintegrationssignal (Si(t)) größer als die Sättigungsschwelle (SA) ist, größer als eine erste Zählschwelle (Sm1) ist.

11. Erfassungsvorrichtung nach einem der Ansprüche 8 bis 10, **dadurch gekennzeichnet, dass** die erste Analysedauer (W1) zwischen 0 und 0,2 Sekunden beträgt.

12. Erfassungsvorrichtung nach den Ansprüchen 1 bis 6, **dadurch gekennzeichnet, dass** ein zweites Erfassungsmittel (DETECT2), das dazu bestimmt ist, Lichtbögen von großer Stärke zu erfassen, ein zweites Signal zur Entscheidungshilfe (N2) liefert, wenn während einer zweiten Analysedauer (W2):
- das Stromdifferentialsignal (dSi(t)) nacheinander:
- zumindest einmal größer als eine absolute Schwelle (L1_absolut) ist,
- mit einer Variationsrate größer als eine relative Variationsschwelle (L1_relativ) steigend ist, und
- das erste, zweite, dritte und vierte adaptative Sperrsignal (Frzi1, Frzi2, Frzi3, Frzi4) inaktiv sind.

13. Erfassungsvorrichtung nach Anspruch 12, **dadurch gekennzeichnet, dass** das zweite Erfassungsmittel (DETECT2) zweite Speichermittel (MEM2) umfasst, die die Anzahl von Malen zählen, an denen das Stromdifferentialsignal (dSi(t)) nacheinander größer als die absolute Schwelle (L1_absolut), dann mit einer Variationsrate größer als die relative Variationsschwelle (L1_relativ) steigend ist.

14. Erfassungsvorrichtung nach Anspruch 13, **dadurch gekennzeichnet, dass** das zweite Erfassungsmittel (DETECT2) ein zweites Signal zur Entscheidungshilfe (N2) liefert, wenn die Anzahl von Malen, an denen das Stromdifferentialsignal (dSi(t)) nacheinander größer als die absolute Schwelle (L1_absolut), dann mit einer Variationsrate größer als eine relative Variationsschwelle (L1_relativ) ist, größer als eine zweite Zählschwelle (Sm2) ist.

15. Erfassungsvorrichtung nach einem der Ansprüche 12 bis 14, **dadurch gekennzeichnet, dass** die zweite Analysedauer (W2) zwischen 0 und 0,2 Sekunden beträgt.

16. Erfassungsvorrichtung nach den Ansprüchen 1 bis 6, **dadurch gekennzeichnet, dass** ein drittes Erfassungsmittel (DETECT3), das dazu bestimmt ist, saline Lichtbögen von mittlerer Stärke zu erfassen, ein drittes Signal zur Entscheidungshilfe (N3) liefert, wenn während einer dritten Analysedauer (W3):
- das Stromdifferentialsignal (dSi(t)) zumindest einmal größer als eine erste Salinschwelle (L3) ist, wobei es nicht kleiner als einer erste Serienschwelle (L4) auf den beiden vorhergehenden Halbwellen des elektrischen Wechselstroms war, und
- das erste, zweite, dritte und vierte adaptative Sperrsignal (Frzi1, Frzi2, Frzi3, Frzi4) inaktiv sind.

17. Erfassungsvorrichtung nach Anspruch 16, **dadurch gekennzeichnet, dass** das dritte Erfassungsmittel (DETECT3) dritte Speichermittel (MEM3) umfasst, die die Anzahl von Malen zählen, an denen das Stromdifferentialsignal (dSi(t)) größer als die erste Salinschwelle (L3) ist, wobei es nicht kleiner als eine erste Serienschwelle (L4) auf den beiden vorhergehenden Halbwellen des elektrischen Wechselstroms war.

18. Erfassungsvorrichtung nach Anspruch 17, **dadurch gekennzeichnet, dass** das dritte Erfassungsmittel (DETECT3) ein drittes Signal zur Entscheidungshilfe (N3) liefert, wenn die Anzahl von Malen, an denen das Stromdifferentialsignal (dSi(t)) größer als die erste Salinschwelle (L3) ist, wobei es nicht kleiner als eine erste Serienschwelle (L4) auf den beiden vorhergehenden Halbwellen des elektrischen Wechselstroms war, größer als eine dritte Zählschwelle (Sm3) ist.

19. Erfassungsvorrichtung nach einem der Ansprüche 16 bis 18, **dadurch gekennzeichnet, dass** die dritte Analysedauer (W3) zwischen 0 und 0,2 Sekunden beträgt.

20. Erfassungsvorrichtung nach den Ansprüchen 1 bis 6, **dadurch gekennzeichnet, dass** ein viertes Erfassungsmittel (DETECT4), das dazu bestimmt ist, serielle Lichtbögen, die in einer Schaltung mit vielen Stromunterbrechungen auftreten, zu erfassen, ein viertes Signal zur Entscheidungshilfe (N4) liefert, wenn während einer vierten Analysedauer (W4):
- das Stromdifferentialsignal (dSi(t)) zumindest einmal kleiner als eine erste Serienschwelle (L4) ist, wobei es nicht größer als eine erste Salinschwelle (L3) auf den beiden vorhergehenden Halbwellen des elektrischen Wechselstroms war, und
- das erste, zweite, dritte und vierte adaptative Sperrsignal (Frzi1, Frzi2, Frzi3, Frzi4) inaktiv sind.

21. Erfassungsvorrichtung nach Anspruch 20, **dadurch gekennzeichnet, dass** das vierte Erfassungsmittel (DETECT4) vierte Speichermittel (MEM4) umfasst, die die Anzahl von Malen zählen, an denen das Stromdifferentialsignal (dSi(t)) kleiner als die erste Serienschwelle (L4) ist, wobei es nicht größer als die erste Salinschwelle (L3) auf den beiden vorhergehenden Halbwellen des elektrischen Wechselstroms war.

22. Erfassungsvorrichtung nach Anspruch 21, **dadurch gekennzeichnet, dass** das vierte Erfassungsmittel (DETECT4) ein viertes Signal zur Entscheidungshilfe (N4) liefert, wenn die Anzahl von Malen, an denen das Stromdifferentialsignal (dSi(t)) kleiner als die erste Serienschwelle (L4) ist, wobei es nicht größer als eine erste Salinschwelle (L3) auf den beiden vorhergehenden Halbwellen des elektrischen Wechselstroms war, größer als eine vierte Zählschwelle (Sm4) ist.

23. Erfassungsvorrichtung nach einem der Ansprüche 20 bis 22, **dadurch gekennzeichnet, dass** die vierte Analysedauer (W4) zwischen 0 und 0,2 Sekunden beträgt.

24. Erfassungsvorrichtung nach Anspruch 3, **dadurch gekennzeichnet, dass** ein fünftes Erfassungsmittel (DETECT5), das dazu bestimmt ist, saline Lichtbögen von großer Stärke zu erfassen, ein fünftes Signal zur Entscheidungshilfe (N5) liefert, wenn während einer fünften Analysedauer (W5):
- das Stromdifferentialsignal (dSi(t)) zumindest einmal nacheinander unterworfen ist:
- einer ersten sehr starken Erhöhung, bei der das Signal größer als eine zweite Salinschwelle (L5-1) ist,
- einer zweiten weniger starken Erhöhung als die erste Erhöhung, bei der das Signal kleiner als eine zweite Salinschwelle bis (L5-2) ist,
- einer starken Verringerung, bei der das Signal kleiner als eine dritte Salinschwelle (L5-3) ist,
wobei die zweite Salinschwelle (L5-1) größer oder gleich der zweiten Salinschwelle bis (L5-2) ist, und die zweite Salinschwelle bis (L5-2) größer als die dritte Salinschwelle (L5-3) ist, und
- das erste adaptative Sperrsignal (Frzi1) inaktiv ist.

25. Erfassungsvorrichtung nach Anspruch 24, **dadurch gekennzeichnet, dass** das fünfte Erfassungsmittel (DETECT5) fünfte Speichermittel (MEM5) umfasst, die die Anzahl von Malen zählen, an denen das Stromdifferentialsignal (dSi(t)) nacheinander einer ersten sehr starken Erhöhung, bei der das Signal größer als eine zweite Salinschwelle (L5-1) ist, einer zweiten weniger starken Erhöhung, bei der das Signal kleiner als eine zweite Salinschwelle bis (L5-2) ist, und einer starken Verringerung, bei der das Signal kleiner als eine dritte Salinschwelle (L5-3) ist, unterzogen wird.

26. Erfassungsvorrichtung nach Anspruch 25, **dadurch gekennzeichnet, dass** das fünfte Erfassungsmittel (DETECT5) ein fünftes Signal zur Entscheidungshilfe (N5) liefert, wenn die Anzahl von Malen, an denen das Stromdifferentialsignal (dSi(t)) nacheinander einer ersten sehr starken Erhöhung, bei der das Signal größer als eine zweite Salinschwelle (L5-1) ist, einer zweiten weniger starken Erhöhung, bei der das Signal kleiner als eine zweite Salinschwelle bis (L5-2) ist, und einer starken Verringerung, bei der das Signal kleiner als eine dritte Salinschwelle (L5-3) ist, unterzogen wird, größer als eine fünfte Zählschwelle (Sm5) ist.

27. Erfassungsvorrichtung nach einem der Ansprüche 24 bis 26, **dadurch gekennzeichnet, dass** die fünfte Analysedauer (W5) zwischen acht und zwölf Sekunden beträgt.

28. Erfassungsvorrichtung nach den Ansprüchen 3 und 7, **dadurch gekennzeichnet, dass** ein sechstes Erfassungsmittel (DETECT6), das dazu bestimmt ist, serielle Lichtbögen, die in einer Schaltung mit wenigen Stromunterbrechungen auftreten, zu erfassen, ein sechstes Signal zur Entscheidungshilfe (N6) liefert, wenn während einer sechsten Analysedauer (W6):
- das Stromdifferentialsignal (dSi(t)) zumindest einmal nacheinander unterworfen ist:
- einer ersten sehr starken Verringerung, bei der das Signal kleiner als eine zweite Serienschwelle (L6-1) ist,
- einer zweiten weniger starken Verringerung als die erste Verringerung, bei der das Signal größer als eine zweite Serienschwelle bis (L6-2) ist,
- einer starken Erhöhung, bei der das Signal größer als eine dritte Serienschwelle (L6-3) ist,
wobei die zweite Serienschwelle (L6-1) kleiner oder gleich der zweiten Serienschwelle bis (L6-2) ist, und die zweite Serienschwelle bis (L6-2) kleiner als die dritte Serienschwelle (L6-3) ist, und
- das erste und das fünfte adaptative Sperrsignal (Frzi1, Frzi5) inaktiv sind.

29. Erfassungsvorrichtung nach Anspruch 28, **dadurch gekennzeichnet, dass** das sechste Erfassungsmittel (DETECT6) sechste Speichermittel (MEM6) umfasst, die die Anzahl von Malen zählen, an denen das Stromdifferentialsignal (dSi(t)) nacheinander einer ersten sehr starken Verringerung, bei der das Signal kleiner als eine zweite Serienschwelle (L6-1) ist, einer zweiten weniger starken Verringerung, bei der das Signal größer als eine zweite Serienschwelle bis (L6-2) ist, und einer starken Erhöhung, bei der das Signal größer als eine dritte Serienschwelle (L6-3) ist, unterzogen wird.

30. Erfassungsvorrichtung nach Anspruch 29, **dadurch gekennzeichnet, dass** das sechste Erfassungsmittel (DETECT6) ein sechstes Signal zur Entscheidungshilfe (N6) liefert, wenn die Anzahl von Malen, an denen das Stromdifferentialsignal (dSi(t)) nacheinander einer ersten sehr starken Verringerung, bei der das Signal kleiner als eine zweite Serienschwelle (L6-1) ist, einer zweiten weniger starken Verringerung, bei der das Signal größer als eine zweite Serienschwelle bis (L6-2) ist, und einer starken Erhöhung, bei der das Signal größer als eine dritte Serienschwelle (L6-3) ist, unterzogen wird, größer als eine sechste Zählschwelle (Sm6) ist.

31. Erfassungsvorrichtung nach einem der Ansprüche 28 bis 30, **dadurch gekennzeichnet, dass** die sechste Analysedauer (W6) zwischen einer halben Sekunde und eineinhalb Sekunden beträgt.

32. Erfassungsvorrichtung nach einem der vorhergehenden Ansprüche, **dadurch gekennzeichnet, dass** Analysemittel (2) ein Mittel umfassen, um den Maximalwert (MAX) des elektrischen Wechselstroms im Rhythmus eines Sequenzierungssignals (Seq) zu bestimmen.

33. Erfassungsvorrichtung nach einem der vorhergehenden Ansprüche, **dadurch gekennzeichnet, dass** sie Mittel zur Bemusterung der gemessenen Strom (I)- und Spannungssignale (U) umfasst, und Mittel zur Speicherung der Mustersignale umfasst.

34. Erfassungsvorrichtung nach einem der vorhergehenden Ansprüche, **dadurch gekennzeichnet, dass** sie Mittel zur Bemusterung der Strom (Si(t))- und Spannungsintegrationssignale (Su(t)) umfasst, und Mittel zur Speicherung der Mustersignale umfasst.

35. Erfassungsvorrichtung nach einem der vorhergehenden Ansprüche, **dadurch gekennzeichnet, dass** die Funktion jedes Mittels zur Berechnung der Strom- und Spannungsintegrations- und -differentialsignale mit dem Senden des Sequenzierungssignals (Seq) synchronisiert ist.

36. Erfassungsvorrichtung nach einem der vorhergehenden Ansprüche, **dadurch gekennzeichnet, dass** die Funktion jedes Erfassungsmittels (DETECT1, DETECT2, DETECT3, DETECT4, DETECTk) mit dem Senden des Sequenzierungssignals (Seq) synchronisiert ist.

37. Abschaltvorrichtung (40), umfassend einen Mechanismus (32) zum Öffnen von elektrischen Kontakten (30) und ein Steuerrelais (31), das mit einer Erfassungsvorrichtung (10) nach einem der vorhergehenden Ansprüche verbunden ist, **dadurch gekennzeichnet, dass** das Steuerrelais (31) dazu bestimmt ist, mindestens ein Auslösesignal (Trip) der Entscheidungsmittel (3) der Erfassungsvorrichtung (10) zu empfangen.

38. Verfahren zur Erfassung eines Lichtbogens, umfassend:
- das Messen eines elektrischen Wechselstroms (I) und einer Wechselspannung (U) mit Messmitteln (1, 4),
- im Rhythmus eines Sequenzierungssignals (Seq) die Berechnung
- eines Integrals (INT) eines Absolutwerts (ABS) des elektrischen Wechselstroms (I) und der elektrischen Wechselspannung (U) auf mindestens einer Halbwelle,
- eines Stromintegrationssignals (Si(t)) und eines Spannungsintegrationssignals (Su(t)),
- die Lieferung eines Stromdifferentialsignals (dSi(t)), das für die Differenz zwischen einem ersten Stromintegrationssignal (Si(t)) und einem zweiten Stromintegrationssignal (Si(t-T)), gemessen auf einer Periode (T) vor dem ersten Integrationssignal, repräsentativ ist,
- die Lieferung eines Spannungsdifferentialsignals (dSu(t)), das für die Differenz zwischen einem ersten Spannungsintegrationssignal (Su(t)) und einem zweiten Spannungsintegrationssignal (Su(t-T)), gemessen auf einer Periode vor dem ersten Integrationssignal, repräsentativ ist,
**dadurch gekennzeichnet, dass** es die Lieferung eines Auslösesignals (Trip) umfasst, das von dem Wert von Signalen zur Entscheidungshilfe (N1, N2, N3, ..., Nk) abhängt, wobei jedes Signal zur Entscheidungshilfe (N1, N2, N3, ..., Nk) bestimmt wird in Abhängigkeit von:
- der Lieferung mindestens eines adaptativen Sperrsignals (Frzi1, Frzi2, Frzi3, ... , Frzin) und
- dem Stromdifferentialsignal (dSi(t)) oder dem Stromintegrationssignal (Si(t)).

39. Verfahren zur Erfassung eines Lichtbogens nach Anspruch 38, **dadurch gekennzeichnet, dass** es das Sequenzierungssignal (Seq) mit dem Durchgang der Wechselspannung (U) bei Null synchronisiert.

40. Verfahren zur Erfassung eines Lichtbogens nach Anspruch 39, **dadurch gekennzeichnet, dass** es die Lieferung eines ersten adaptativen Sperrsignals (Frzi1) umfasst, das aktiv ist, wenn das Sequenzierungssignal (Seq) nicht mehr mit dem Durchgang der elektrischen Wechselspannung (U) bei Null synchronisiert ist.

41. Verfahren zur Erfassung eines Lichtbogens nach Anspruch 38 oder 39, **dadurch gekennzeichnet, dass** es die Lieferung eines zweiten adaptativen Sperrsignals (Frzi2) umfasst, das aktiv ist, wenn das Stromdifferentialsignal (dSi(t)) derselben Variation wie das Spannungsdifferentialsignal (dSu(t)) während einer Analysedauer des Stroms (I) folgt.

42. Verfahren zur Erfassung eines Lichtbogens nach Anspruch 38 oder 39, **dadurch gekennzeichnet, dass** es die Lieferung eines dritten adaptativen Sperrsignals (Frzi3) umfasst, das aktiv ist, wenn das Stromdifferentialsignal (dSi(t)) abnimmt, um einen Nullwert zu erreichen, nachdem es einer starken Erhöhung ausgesetzt war.

43. Verfahren zur Erfassung eines Lichtbogens nach Anspruch 38 oder 39, **dadurch gekennzeichnet, dass** es die Lieferung eines vierten adaptativen Sperrsignals (Frzi4) umfasst, das aktiv ist, wenn der elektrische Wechselstrom (I) von asymmetrischer Form in Bezug zu einer Stromnulllinie ist, wobei die Asymmetrie dazu neigt, sich zu verringern, um zu verschwinden.

44. Verfahren zur Erfassung eines Lichtbogens nach Anspruch 38 oder 39, **dadurch gekennzeichnet, dass** es die Lieferung eines fünften adaptativen Sperrsignals (Frzi5) umfasst, das aktiv ist, wenn eine Verringerung des Stromdifferentialsignals (dSi(t)) größer als der durchschnittliche Wert des Stromintegrationssignals (Si(t)) ist.

45. Verfahren zur Erfassung eines Lichtbogens nach Anspruch 40, **dadurch gekennzeichnet, dass** es die Lieferung eines ersten Signals zur Entscheidungshilfe (N1) umfasst, wenn während einer ersten Analysedauer (W1):
- das Stromintegrationssignal (dSi(t)) zumindest einmal größer als eine Sättigungsschwelle (SA) ist, und
- das erste adaptative Sperrsignal (Frzi1) inaktiv ist.

46. Verfahren zur Erfassung eines Lichtbogens nach den Ansprüchen 38 bis 43, **dadurch gekennzeichnet, dass** es die Lieferung eines zweiten Signals zur Entscheidungshilfe (N2) umfasst, wenn während einer zweiten Analysedauer (W2):
- das Stromdifferentialsignal (dSi(t)) nacheinander:
- zumindest einmal größer als eine absolute Schwelle (L1_absolut) ist,
- mit einer Variationsrate größer als eine relative Variationsschwelle (L1_relativ) steigend ist, und
- das erste, zweite, dritte und vierte adaptative Sperrsignal (Frzi1, Frzi2, Frzi3, Frzi4) inaktiv sind.

47. Verfahren zur Erfassung eines Lichtbogens nach den Ansprüchen 38 bis 43, **dadurch gekennzeichnet, dass** es die Lieferung eines dritten Signals zur Entscheidungshilfe (N3) umfasst, wenn während einer dritten Analysedauer (W3):
- das Stromdifferentialsignal (dSi(t)) zumindest einmal größer als eine erste Salinschwelle (L3) ist, wobei es nicht kleiner als eine erste Serienschwelle (L4) auf den beiden vorhergehenden Halbwellen des elektrischen Wechselstroms war, und
- das erste, zweite, dritte und vierte adaptative Sperrsignal (Frzi1, Frzi2, Frzi3, Frzi4) inaktiv sind.

48. Verfahren zur Erfassung eines Lichtbogens nach den Ansprüchen 38 bis 43, **dadurch gekennzeichnet, dass** es die Lieferung eines vierten Signals zur Entscheidungshilfe (N4) umfasst, wenn während einer vierten Analysedauer (W4):
- das Stromdifferentialsignal (dSi(t)) zumindest einmal kleiner als eine erste Serienschwelle (L4) ist, wobei es nicht größer als eine erste Salinschwelle (L3) auf den beiden vorhergehenden Halbwellen des elektrischen Wechselstroms war, und
- das erste, zweite, dritte und vierte adaptative Sperrsignal (Frzi1, Frzi2, Frzi3, Frzi4) inaktiv sind.

49. Verfahren zur Erfassung eines Lichtbogens nach Anspruch 40, **dadurch gekennzeichnet, dass** es die Lieferung eines fünften Signals zur Entscheidungshilfe (N5) umfasst, wenn während einer fünften Analysedauer (W5):
- das Stromdifferentialsignal (dSi(t)) zumindest einmal nacheinander unterworfen ist:
- einer ersten sehr starken Erhöhung, bei der das Signal größer als eine zweite Salinschwelle (L5-1) ist,
- einer zweiten weniger starken Erhöhung als die erste Erhöhung, bei der das Signal kleiner als eine zweite Salinschwelle bis (L5-2) ist,
- einer starken Verringerung, bei der das Signal kleiner als eine dritte Salinschwelle (L5-3) ist,
wobei die zweite Salinschwelle (L5-1) größer oder gleich der zweiten Salinschwelle bis (L5-2) ist, und die zweite Salinschwelle bis (L5-2) größer als die dritte Salinschwelle (L5-3) ist, und
- das erste adaptative Sperrsignal (Frzi1) inaktiv ist.

50. Verfahren zur Erfassung eines Lichtbogens nach den Ansprüchen 40 und 44, **dadurch gekennzeichnet, dass** es die Lieferung eines sechsten Signals zur Entscheidungshilfe (N6) umfasst, wenn während einer sechsten Analysedauer (W6):
- das Stromdifferentialsignal (dSi(t)) zumindest einmal nacheinander unterworfen ist:
- einer ersten sehr starken Verringerung, bei der das Signal kleiner als eine zweite Serienschwelle (L6-1) ist,
- einer zweiten weniger starken Verringerung als die erste Verringerung, bei der das Signal größer als eine zweite Serienschwelle bis (L6-2) ist,
- einer starken Erhöhung, bei der das Signal größer als eine dritte Serienschwelle (L6-3) ist,
wobei die zweite Serienschwelle (L6-1) kleiner oder gleich der zweiten Serienschwelle bis (L6-2) ist, und die zweite Serienschwelle bis (L6-2) kleiner als die dritte Serienschwelle (L6-3) ist, und
- das erste und das fünfte adaptative Sperrsignal (Frzi1, Frzi5) inaktiv sind.

## Claims

1. Device for detecting (10) an electric arc, comprising:
• means for measuring (1, 4) an AC electric current (I) and an AC voltage (U),
• analysis means (2) that are connected to the measurement means (1, 4), and comprising
• calculation means for calculating, at the cadence of a sequencing signal (Seq), an integral (INT) of an absolute value (ABS):
• of the AC electric current (I) over at least one half-cycle, and delivering a current integration signal (Si(t));
• of the AC voltage (U) over at least one half-cycle, and delivering a voltage integration signal (Su(t)),
• differentiation means (DIFF) delivering
• a current differentiation signal (dSi(t)), representative of the difference between a first current integration signal (Si(t)) and a second current integration signal (Si(t-T)) that is measured over a period (T) before said first integration signal;
• a voltage differentiation signal (dSu(t)), representative of the difference between a first voltage integration signal (Su(t)) and a second voltage integration signal (Su(t-T)) that is measured over a period before said first integration signal,
• decision means (3) that are connected to the analysis means (2) and which are intended to send at least one trip signal (Trip), the decision means (3) comprising detection means (DETECT 1, DETECT 2, DETECT 3, DETECT 4, ..., DETECT k) that are each intended to deliver at least one signal for aiding the decision (N1, N2, N3, ..., Nk), and comprising a decision unit (DECIDE) that is intended to deliver at least one trip signal (Trip),
**characterized in that** the decision means (3) comprise an inhibitor unit (INHIBIT) delivering adaptive inhibition signals (Frzi1, Frzi2, Frzi3, ..., Frzin) to the detection means (DETECT 1, DETECT 2, DETECT 3, DETECT 4, ..., DETECT k),
• said at least one signal for aiding the decision (N1, N2, N3, ..., Nk) being dependent on at least one adaptive inhibition signal (Frzi1, Frzi2, Frzi3, ..., Frzin), and on the current differentiation signal (dSi(t)) or on the current integration signal (Si(t));
• said at least one trip signal (Trip) being dependent on the value of signals for aiding the decision (N1, N2, N3, ..., Nk).

2. Detection device according to Claim 1, **characterized in that** the sequencing signal (Seq) is synchronized with the zero crossing of the AC voltage (U).

3. Detection device according to Claim 2, **characterized in that** a first adaptive inhibition signal (Frz1) is active when the sequencing signal (Seq) is no longer synchronized with the zero crossing of the AC voltage (U).

4. Detection device according to Claim 1 or 2, **characterized in that** a second adaptive inhibition signal (Frzi2) is active when the current differentiation signal (dSi(t)) follows the same variation as the voltage differentiation signal (dSu(t)) for a duration over which the current (I) is analysed.

5. Detection device according to Claim 1 or 2, **characterized in that** a third adaptive inhibition signal (Frzi3) is active when the current differentiation signal (dSi(t)) decreases in order to reach a zero value after having undergone a sudden increase.

6. Detection device according to Claim 1 or 2, **characterized in that** a fourth adaptive inhibition signal (Frzi4) is active when the form of the AC electric current (I) is asymmetrical with respect to a zero current line, the asymmetry tending to decrease in order to cancel itself out.

7. Detection device according to Claim 1 or 2, **characterized in that** a fifth adaptive inhibition signal (Frzi5) is active when a decrease in the current differentiation signal (dSi(t)) is greater than the mean value of the current integration signal (Si(t)).

8. Detection device according to Claim 3, **characterized in that** a first detection means (DETECT1), intended to detect electric arcs of very high current, delivers a first signal for aiding the decision (N1) if, over a first duration of analysis (W1):
- the current integration signal (dSi(t)) is greater than a saturation threshold (SA), at least once, and
- the first adaptive inhibition signal (Frzi1) is inactive.

9. Detection device according to Claim 8, **characterized in that** the first detection means (DETECT1) comprises first memorization means (MEM1) counting the number of times that the current integration signal (Si(t)) is greater than the saturation threshold (SA).

10. Detection device according to Claim 9, **characterized in that** the first detection means (DETECT1) delivers a first signal for aiding the decision (N1) if the number of times that the current integration signal (Si(t)) is greater than the saturation threshold (SA), is greater than a first counting threshold (Sm1).

11. Detection device according to one of Claims 8 to 10, **characterized in that** the first duration of analysis (W1) is between 0 and 0.2 seconds.

12. Detection device according to Claims 1 to 6, **characterized in that** a second detection means (DETECT2), intended to detect high-current electric arcs, delivers a second signal for aiding the decision (N2) if, over a second duration of analysis (W2):
- the current differentiation signal (dSi(t)) is successively:
- greater than an absolute threshold (L1_absolute), at least once;
- increasing at a rate of change that is greater than a threshold of relative change (L1_relative), and
- the first, second, third and fourth adaptive inhibition signals (Frzi1, Frzi2, Frzi3, Frzi4) are inactive.

13. Detection device according to Claim 12, **characterized in that** the second detection means (DETECT2) comprises second memorization means (MEM2) counting the number of times that the current differentiation signal (dSi(t)) is successively greater than the absolute threshold (L1_absolute), and then increasing at a rate of change that is greater than the threshold of relative change (L1_relative).

14. Detection device according to Claim 13, **characterized in that** the second detection means (DETECT2) delivers a second signal for aiding the decision (N2) if the number of times that the current differentiation signal (dSi(t)) is successively greater than the absolute threshold (L1_absolute), and then increasing at a rate of change that is greater than a threshold of relative change (L1_relative), is greater than a second counting threshold (Sm2).

15. Detection device according to one of Claims 12 to 14, **characterized in that** the second duration of analysis (W2) is between 0 and 0.2 seconds.

16. Detection device according to Claims 1 to 6, **characterized in that** a third detection means (DETECT3), intended to detect medium-current saline arcs, delivers a third signal for aiding the decision (N3) if, over a third duration of analysis (W3):
- the current differentiation signal (dSi(t)) is greater than a first saline threshold (L3), at least once, while not having been smaller than a first series threshold (L4) over the two preceding half-cycles of the AC electric current, and
- the first, second, third and fourth adaptive inhibition signals (Frzi1, Frzi2, Frzi3, Frzi4) are inactive.

17. Detection device according to Claim 16, **characterized in that** the third detection means (DETECT3) comprises third memorization means (MEM3) counting the number of times that the current differentiation signal (dSi(t)) is greater than the first saline threshold (L3), while not having been smaller than a first series threshold (L4) over the two preceding half-cycles of the AC electric current.

18. Detection device according to Claim 17, **characterized in that** the third detection means (DETECT3) delivers a third signal for aiding the decision (N3) if the number of times that the current differentiation signal (dSi(t)) is greater than the first saline threshold (L3), while not having been smaller than a first series threshold (L4) over the two preceding half-cycles of the AC electric current, is greater than a third counting threshold (Sm3).

19. Detection device according to one of Claims 16 to 18, **characterized in that** the third duration of analysis (W3) is between 0 and 0.2 seconds.

20. Detection device according to Claims 1 to 6, **characterized in that** a fourth detection means (DETECT4), intended to detect series arcs occurring in a circuit with many current breaks, delivers a fourth signal for aiding the decision (N4) if, over a fourth duration of analysis (W4):
- the current differentiation signal (dSi(t)) is smaller than a first series threshold (L4), at least once, while not having been greater than a first saline threshold (L3) over the two preceding half-cycles of the AC electric current, and
- the first, second, third and fourth adaptive inhibition signals (Frzi1, Frzi2, Frzi3, Frzi4) are inactive.

21. Detection device according to Claim 20, **characterized in that** the fourth detection means (DETECT4) comprises fourth memorization means (MEM4) counting the number of times that the current differentiation signal (dSi(t)) is smaller than the first series threshold (L4), while not having been greater than the first saline threshold (L3) over the two preceding half-cycles of the AC electric current.

22. Detection device according to Claim 21, **characterized in that** the fourth detection means (DETECT4) delivers a fourth signal for aiding the decision (N4) if the number of times that the current differentiation signal (dSi(t)) is smaller than the first series threshold (L4), while not having been greater than the first saline threshold (L3) over the two preceding half-cycles of the AC electric current, is greater than a fourth counting threshold (Sm4).

23. Detection device according to one of Claims 20 to 22, **characterized in that** the fourth duration of analysis (W4) is between 0 and 0.2 seconds.

24. Detection device according to Claim 3, **characterized in that** a fifth detection means (DETECT5), intended to detect high-current saline arcs, delivers a fifth signal for aiding the decision (N5) if, over a fifth duration of analysis (W5):
- the current differentiation signal (dSi(t)) successively undergoes at least once:
- a first, very large, increase in which said signal is greater than a second saline threshold (L5-1);
- a second increase, smaller than the first increase, in which said signal is smaller than an alternative second saline threshold (L5-2);
- a large decrease in which said signal is smaller than a third saline threshold (L5-3),
the second saline threshold (L5-1) being greater than or equal to the alternative second saline threshold (L5-2) and the alternative second saline threshold (L5-2) being greater than the third saline threshold (L5-3), and
- the first adaptive inhibition signal (Frzi1) being inactive.

25. Detection device according to Claim 24, **characterized in that** the fifth detection means (DETECT5) comprises fifth memorization means (MEM5) counting the number of times that the current differentiation signal (dSi(t)) successively undergoes a first, very large, increase, in which said signal is greater than a second saline threshold (L5-1), a second, lesser, increase, in which said signal is smaller than an alternative second saline threshold (L5-2), and a large decrease, in which said signal is smaller than a third saline threshold (L5-3).

26. Detection device according to Claim 25, **characterized in that** the fifth detection means (DETECT5) delivers a fifth signal for aiding the decision (N5) if the number of times that the current differentiation signal (dSi(t)) successively undergoes a first, very large, increase, in which said signal is greater than a second saline threshold (L5-1), a second, lesser, increase, in which said signal is smaller than an alternative second saline threshold (L5-2), and a large decrease, in which said signal is smaller than a third saline threshold (L5-3), is greater than a fifth counting threshold (Sm5).

27. Detection device according to one of Claims 24 to 26, **characterized in that** the fifth duration of analysis (W5) is between 8 and 12 seconds.

28. Detection device according to Claims 3 and 7, **characterized in that** a sixth detection means (DETECT6), intended to detect series arcs occurring in a circuit with few current breaks, delivers a sixth signal for aiding the decision (N6) if, over a sixth duration of analysis (W6):
- the current differentiation signal (dSi(t)) successively undergoes at least once:
- a first, very large, decrease, in which said signal is smaller than a second series threshold (L6-1);
- a second decrease, smaller than the first decrease, in which said signal is greater than an alternative second series threshold (L6-2);
- a large increase, in which said signal is greater than a third series threshold (L6-3),
the second series threshold (L6-1) being smaller than or equal to the alternative second series threshold (L6-2) and the alternative second series threshold (L6-2) being smaller than the third series threshold (L6-3), and
- the first and fifth inhibition signals (Frzi1, Frzi5) are inactive.

29. Detection device according to Claim 28, **characterized in that** the sixth detection means (DETECT6) comprises sixth memorization means (MEM6) counting the number of times that the current differentiation signal (dSi(t)) successively undergoes a first, very large, decrease, in which said signal is smaller than a second series threshold (L6-1), a second, lesser, decrease, in which said signal is greater than an alternative second series threshold (L6-2), and a large increase, in which said signal is greater than a third series threshold (L6-3).

30. Detection device according to Claim 29, **characterized in that** the sixth detection means (DETECT6) delivers a sixth signal for aiding the decision (N6) if the number of times that the current differentiation signal (dSi(t)) successively undergoes a first, very large, decrease, in which said signal is smaller than a second series threshold (L6-1), a second, lesser, decrease, in which said signal is greater than an alternative second series threshold (L6-2), and a large increase, in which said signal is greater than a third series threshold (L6-3), is greater than a sixth counting threshold (Sm6).

31. Detection device according to one of Claims 28 to 30, **characterized in that** the sixth duration of analysis (W6) is between half a second and a second and a half.

32. Detection device according to any one of the preceding claims, **characterized in that** the analysis means (2) comprise a means for determining the maximum value (MAX) of the AC electric current, at the cadence of a sequencing signal (Seq).

33. Detection device according to any one of the preceding claims, **characterized in that** it comprises means for sampling measured current (I) and voltage (U) signals and comprises means for storing said sampled signals.

34. Detection device according to any one of the preceding claims, **characterized in that** it comprises means for sampling current (Si(t)) and voltage (Su(t)) integration signals and comprises means for storing said sampled signals.

35. Detection device according to any one of the preceding claims, **characterized in that** the operation of each means for calculating the current and voltage integration and differentiation signals is synchronized with the sending of the sequencing signal (Seq).

36. Detection device according to any one of the preceding claims, **characterized in that** the operation of each detection means (DETECT1, DETECT2, DETECT3 DETECT4, ..., DETECTk) is synchronized with the sending of the sequencing signal (Seq).

37. Cut-off device (40) comprising a mechanism for opening (32) electrical contacts (30) and a control relay (31) that is connected to a detection device (10) according to any one of the preceding claims, **characterized in that** the control relay (31) is intended to receive at least one trip signal (Trip) from the decision means (3) of the detection device (10).

38. Method for detecting an electric arc, comprising:
• the measurement of an AC electric current (I) and an AC voltage (U) using measurement means (1, 4);
• the calculation, at the cadence of a sequencing signal (Seq):
• of an integral (INT) of an absolute value (ABS) of the AC electric current (I) and of the AC voltage (U) over at least one half-cycle;
• of a current integration signal (Si(t)) and a voltage integration signal (Su(t)),
• the delivery of a current differentiation signal (dSi(t)), representative of the difference between a first current integration signal (Si(t)) and a second current integration signal (Si(t-T)) that is measured over a period (T) before said first integration signal;
• the delivery of a voltage differentiation signal (dSu(t)), representative of the difference between a first voltage integration signal (Su(t)) and a second voltage integration signal (Su(t-T)) that is measured over a period before said first integration signal,
**characterized in that** it comprises the delivery of a trip signal (Trip) that is dependent on the value of signals for aiding the decision (N1, N2, N3, ..., Nk), each signal for aiding the decision (N1, N2, N3, ..., Nk) being determined depending on:
• the delivery of at least one adaptive inhibition signal (Frzi1, Frzi2, Frzi3, ... , Frzin) and
• the current differentiation signal (dSi(t)) or the current integration signal (Si(t)).

39. Method for detecting an arc according to Claim 38, **characterized in that** it synchronizes the sequencing signal (Seq) with the zero crossing of the AC voltage (U).

40. Method for detecting an arc according to Claim 39, **characterized in that** it comprises the delivery of a first adaptive inhibition signal (Frz1) that is active when the sequencing signal (Seq) is no longer synchronized with the zero crossing of the AC voltage (U).

41. Method for detecting an arc according to Claim 38 or 39, **characterized in that** it comprises the delivery of a second adaptive inhibition signal (Frzi2) that is active when the current differentiation signal (dSi(t)) follows the same variation as the voltage differentiation signal (dSu(t)) for a duration over which the current (I) is analysed.

42. Method for detecting an arc according to Claim 38 or 39, **characterized in that** it comprises the delivery of a third adaptive inhibition signal (Frzi3) that is active when the current differentiation signal (dSi(t)) decreases in order to reach a zero value after having undergone a sudden increase.

43. Method for detecting an arc according to Claim 38 or 39, **characterized in that** it comprises the delivery of a fourth adaptive inhibition signal (Frzi4) that is active when the form of the AC electric current (I) is asymmetrical with respect to a zero current line, the asymmetry tending to decrease in order to cancel itself out.

44. Method for detecting an arc according to Claim 38 or 39, **characterized in that** it comprises the delivery of a fifth adaptive inhibition signal (Frzi5) that is active when a decrease in the current differentiation signal (dSi(t)) is greater than the mean value of the current integration signal (Si(t)).

45. Method for detecting an arc according to Claim 40, **characterized in that** it comprises the delivery of a first signal for aiding the decision (N1) if, over a first duration of analysis (W1):
- the current integration signal (dSi(t)) is greater than a saturation threshold (SA), at least once, and
- the first adaptive inhibition signal (Frzi1) is inactive.

46. Method for detecting an arc according to Claims 38 to 43, **characterized in that** it comprises the delivery of a second signal for aiding the decision (N2) if, over a second duration of analysis (W2):
- the current differentiation signal (dSi(t)) is successively:
- greater than an absolute threshold (L1_absolute), at least once;
- increasing at a rate of change that is greater than a threshold of relative change (L1_relative), and
- the first, second, third and fourth adaptive inhibition signals (Frzi1, Frzi2, Frzi3, Frzi4) are inactive.

47. Method for detecting an arc according to Claims 38 to 43, **characterized in that** it comprises the delivery of a third signal for aiding the decision (N3) if, over a third duration of analysis (W3):
- the current differentiation signal (dSi(t)) is greater than a first saline threshold (L3), at least once, while not having been smaller than a first series threshold (L4) over the two preceding half-cycles of the AC electric current, and
- the first, second, third and fourth adaptive inhibition signals (Frzi1, Frzi2, Frzi3, Frzi4) are inactive.

48. Method for detecting an arc according to Claims 38 to 43, **characterized in that** it comprises the delivery of a fourth signal for aiding the decision (N4) if, over a fourth duration of analysis (W4):
- the current differentiation signal (dSi(t)) is smaller than a first series threshold (L4), at least once, while not having been greater than a first saline threshold (L3) over the two preceding half-cycles of the AC electric current, and
- the first, second, third and fourth adaptive inhibition signals (Frzi1, Frzi2, Frzi3, Frzi4) are inactive.

49. Method for detecting an arc according to Claim 40, **characterized in that** it comprises the delivery of a fifth signal for aiding the decision (N5) if, over a fifth duration of analysis (W5):
- the current differentiation signal (dSi(t)) successively undergoes at least once:
- a first, very large, increase in which said signal is greater than a second saline threshold (L5-1);
- a second increase, smaller than the first increase, in which said signal is smaller than an alternative second saline threshold (L5-2);
- a large decrease in which said signal is smaller than a third saline threshold (L5-3),
the second saline threshold (L5-1) being greater than or equal to the alternative second saline threshold (L5-2) and the alternative second saline threshold (L5-2) being greater than the third saline threshold (L5-3), and
- the first adaptive inhibition signal (Frzi1) being inactive.

50. Method for detecting an arc according to Claims 40 and 44, **characterized in that** it comprises the delivery of a sixth signal for aiding the decision (N6) if, over a sixth duration of analysis (W6):
- the current differentiation signal (dSi(t)) successively undergoes at least once:
- a first, very large, decrease, in which said signal is smaller than a second series threshold (L6-1);
- a second decrease, smaller than the first decrease, in which said signal is greater than an alternative second series threshold (L6-2);
- a large increase, in which said signal is greater than a third series threshold (L6-3),
the second series threshold (L6-1) being smaller than or equal to the alternative second series threshold (L6-2) and the alternative second series threshold (L6-2) being smaller than the third series threshold (L6-3), and
the first and fifth adaptive inhibition signals (Frzi1, Frzi5) are inactive.
